# EUROPEAN PATENT SPECIFICATION

(11) **EP 4 474 778 B1**
(45) Date of publication and mention of the grant of the patent: **21.01.2026**
(21) Application number: 24162703.3
(22) Date of filing: 11.03.2024
(51) Int. Cl.: G01G 19/00, G01G 23/01

(54) **A CALIBRATION CONFIGURATION AND A METHOD OF CALIBRATION**
KALIBRIERUNGSKONFIGURATION UND VERFAHREN ZUR KALIBRIERUNG
CONFIGURATION D'ÉTALONNAGE ET PROCÉDÉ D'ÉTALONNAGE

(30) Priority: 05.06.2023 SE 2350686
(43) Date of publication of application: 11.12.2024
(73) Proprietor: Daprox AB, 141 75 Kungens Kurva (SE)
(72) Inventor: ÅKERBLOM, Bengt, 141 75 Kungens Kurva (SE); HEMLÉN, Mikael, 141 74 Segeltorp (SE)
(74) Representative: Zacco Sweden AB

(56) References cited:
- EP-A2- 1 175 970
- US-A1- 2019 137 324

## Description

### TECHNICAL FIELD

The present invention relates to a calibration configuration for calibration of a weighing arrangement and relates to a method of calibration of the weighing arrangement. The present invention further relates to a data medium, configured for storing a data program, programmed for controlling the calibration of the weighing arrangement and a data program.

The present invention especially may concern calibration arrangements of dynamic weighing systems applied to garbage vehicles.

The present invention may concern the industry providing and/or producing weighing arrangements configured for the weighing of refuse or garbage cans, which cans are emptied into refuse collection vehicles or garbage vehicles.

### BACKGROUND

Current calibration configurations for calibration of weighing arrangements of dynamic weighing systems adapted to garbage vehicles may employ calibration devices configured to calibrate the weighing arrangement on site, i.e. at the garbage vehicle. Such calibration devices require large work effort and can be complicated to handle, which in turn implies high service and maintenance cost. Current calibration systems for calibration of weighing arrangements of dynamic weighing systems lack a cost-effective method for calibration and lack a robust calibration configuration for dynamic weighing systems adapted to garbage vehicles.

Document US 2019/137324 A1 discloses a weighing calibration system and method adapted to garbage vehicles and document EP 1 175 970 A2 discloses a method for calibrating a robot having a robot end effector in a processing system where a distance between a position of a robot end effector and a target position in the useable free-space is determined using an analog proximity sensor.

Current weighing arrangements or load cells of a garbage vehicle may use a separate angular rate sensor mounted to a rotational axis of a movable frame arrangement of the garbage vehicle and at a distance from the load cell. The angular rate sensor and other components of current weighing arrangements require that service personnel must employ large work effort in coupling of components of the weighing arrangement to each other at the movable frame arrangement, which in turn is time consuming and implies high cost for calibration when replacing e.g. a damaged load cell to a new one.

### SUMMARY OF THE INVENTION

An object of the present invention is to provide a method of calibration of a weighing arrangement, which weighing arrangement is robust and promotes cost-effective maintenance service of the weighing arrangement.

An object is to provide a calibration configuration for calibration of a weighing arrangement that provides redundancy in view of reliability and maintenance.

An object is to provide a cost-effective production line for the production of -ready to use- weighing arrangements that can be mounted to a movable frame arrangement of a garbage vehicle, wherein service personnel easily provides plug-in of the weighing arrangement (already calibrated) to the present communication hub of the garbage vehicle.

An object is to provide a weighing arrangement that is ready to mount to a movable frame arrangement of a garbage vehicle, which movable frame arrangement is used for lifting a garbage can and emptying garbage from the garbage can into a garbage container of the garbage vehicle.

An object is to improve current calibration configurations for calibration of a weighing arrangement and to improve current calibration methods for calibration of a weighing arrangement.

An object is to provide a plug-in weighing arrangement, which is calibrated and ready to use at a garbage vehicle for dynamic weighing of refuse collections or garbage.

This or at least one of said objects has been achieved by a method of calibration of a weighing arrangement for dynamic weighing of a load by the use of a calibration configuration, which method is characterized by the steps of claim 1.

Alternatively, processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

**In** such a way is achieved a calibration configuration that is configured to calibrate a weighing arrangement adapted for dynamic weighing, the weighing arrangement is calibrated by means of a programmable robot apparatus in a work-shop, which weighing arrangement is ready to use for dynamic weighing in a garbage vehicle without any need of re-calibration when mounted to the garbage vehicle and which weighing arrangement comprises all necessary components and sensors for proving the dynamic weighing.

**In** such a way, the weighing arrangement is ready to use and is ready be mounted to a movable frame arrangement of the garbage vehicle.

Alternatively, the movable frame arrangement is configured to make a lifting path for emptying the garbage can into a garbage container of the garbage vehicle.

**In** such way is achieved a weighing arrangement that is calibrated and ready to be used by a specific type of garbage vehicle designed for making a specific lifting path of the movable frame arrangement.

**In** such way, there is no need to drive a garbage truck having a movable frame (adapted for garbage emptying) to a calibration work-shop for mounting a load cell (to be calibrated) at the movable frame and electrically connect it to a separate calibration computer and sensor means of the movable frame.

Consequently, fuel and energy is saved by the fact that the garbage truck does not have to be driven to a calibration site.

There is thus no need to mount, and subsequently individually calibrate a complex weighing system at each garbage truck, wherein each individual load cell exhibits discrete and individually separate/distinct weighing characteristics.

Consequently, there is no need to couple a load cell to any calibration computer and to eventual sensor arrangements (e.g. rotary position sensors) of a movable frame of the garbage truck, which is the case with prior art arrangements.

**In** such way, it is not necessary to calibrate a load cell for each garbage truck and/or specific model of garbage truck, at the garbage truck per se and mounted on the movable frame.

Thereby is achieved that the programmable robot apparatus can be used for weighing calibration of a plurality of weighing arrangements, each of which being ready to use at a respective garbage vehicle of a plurality of garbage vehicles comprising a respective movable frame arrangement performing similar lifting paths which correspond with the lifting path characteristic provided by the programmable robot apparatus.

Alternatively, the lifting path characteristic is programmed to the motion control circuitry of the programmable robot apparatus so that the programmable robot apparatus performs at least the first and/or second and/or third and/or fourth and/or fifth sequence span calibration by lifting the first and/or second and/or third and/or fourth and/or fifth calibration weight member according to the lifting path characteristic corresponding with the lifting path of the movable frame arrangement of the garbage vehicle.

Alternatively, the motion control circuitry is adapted to read (learn) the lifting path belonging to a specific design/model of garbage vehicle and translate this motion to the lifting path characteristic.

Alternatively, the motion control circuitry is adapted for memorizing the lifting path of the movable frame arrangement of the garbage vehicle, which lifting path belongs to a specific design/model of garbage vehicle.

Alternatively, the first and/or second and/or third and/or fourth and/or fifth sequence span calibration is performed by lifting the first and/or second and/or third and/or fourth and/or fifth calibration weight member according to the lifting path characteristic, which corresponds with the lifting path of the movable frame arrangement of the garbage vehicle for emptying the garbage can into the garbage container of the garbage vehicle.

Alternatively, a vehicle data communication link and/or the data communication link being configured to be coupled to the electrical control circuitry via a common plug-in member of the weighing arrangement.

**In** such a way, the weighing arrangement is provided to be coupled to a communication hub of the garbage vehicle in an uncomplicated manner.

Alternatively, the data communication link is configured to be coupled between an electrical control circuitry plug-in member of the weighing arrangement and an electrical calibration circuitry plug-in member of the programmable robot apparatus.

Alternatively, the weighing arrangement comprises a compensation control circuitry electronically coupled to the electrical control circuitry and adapted to adjust the weight value into a weighing arrangement measured weight value by compensating for acceleration and/or angle alteration per time and/or angle rate of the weighing arrangement during said dynamic weighing.

Alternatively, the electrical control circuitry is further adapted to register the weighing arrangement measured weight value.

Alternatively, the step of performing the first sequence span calibration comprises rolling the weighing arrangement to a predetermined angle, and subsequently performing the first sequence span calibration by lifting the first calibration weight member according to the lifting path characteristic.

Alternatively, the step of performing the first sequence span calibration comprises pitching the weighing arrangement to a predetermined angle, and subsequently performing the first sequence span calibration by lifting the first calibration weight member according to the lifting path characteristic.

Alternatively, the calibration circuitry is adapted register an actual weight value of a second calibration weight member; the method further comprises the steps of coupling the weighing arrangement to the second calibration weight member; lifting the second calibration weight member free of any obstruction; and performing a second sequence span calibration by lifting the second calibration weight member according the lifting path characteristic.

Alternatively, the calibration circuitry is adapted register an actual weight value of a second calibration weight member; the method further comprises the steps of: processing the weighing arrangement measured weight value of the second calibration weight member and the actual weight value of the second calibration weight member, and/or comparing said weighing arrangement measured weight value with said actual weight value, for providing an adjusted weighing arrangement measured weight value of the second calibration weight member corresponding with the actual weight value of the second calibration weight member; registering the adjusted weighing arrangement measured weight value of the second calibration weight member in a memory circuitry of the electrical control circuitry of the weighing arrangement; and releasing the second calibration weight member from the weighing arrangement.

Alternatively, the step of performing the second sequence span calibration comprises rolling the weighing arrangement to the predetermined angle, and subsequently performing the second sequence span calibration by lifting the second calibration weight member according to the lifting path characteristic.

Alternatively, the step of performing the second sequence span calibration comprises pitching the weighing arrangement to a predetermined angle, and subsequently performing the second sequence span calibration by lifting the second calibration weight member according to the lifting path characteristic.

Alternatively, the weighing arrangement is configured to be releasable coupled to a second calibration weight member by means of the calibration weight member-weighing arrangement coupling tool member; wherein the calibration circuitry is adapted for electrical communication with the electrical control circuitry via the data communication link; wherein the electrical control circuitry is adapted to send a second output data signal regarding the weighing arrangement measured weight value of the second calibration weight member to the calibration circuitry via said data communication link; wherein the calibration circuitry is adapted to register an actual weight value of the second calibration weight member; and the calibration circuitry is adapted to send a second input data signal to the electrical control circuitry regarding the actual weight value of the second calibration weight member via said data communication link.

Alternatively, the calibration circuitry is adapted register an actual weight value of a third calibration weight member; the method further comprises the steps of: coupling the weighing arrangement to the third calibration weight member; lifting the third calibration weight member free of any obstruction; performing a third sequence span calibration by lifting the third calibration weight member according the lifting path characteristic; comparing the weighing arrangement measured weight value of the third calibration member with the actual weight value of the third calibration weight member, and adjusting the weighing arrangement measured weight value to the actual weight (50) value of the third calibration weight member, and releasing the weighing arrangement from the third calibration weight member.

Alternatively, the performing of the first sequence span calibration by lifting the first calibration weight according to the lifting path characteristic is repeated a pre-determined number of times.

Alternatively, the lifting of the respective second and/or third and/or fourth and/or fifth calibration weight according to the lifting path characteristic is repeated a pre-determined number of times.

Alternatively, the first and/or second and/or third and/or fourth and/or fifth sequence span calibration being performed arc-wise from a lower position to a higher position of the weighing arrangement, wherein the robot unit is configured to make an arc-wise lifting path of the end effector device.

Alternatively, the first and/or second and/or third and/or fourth and/or fifth sequence span calibration being performed vertically, wherein the robot unit is configured to make a vertical lifting path of the end effector device.

Alternatively, the lifting path characteristic comprises a first lifting path and/or a second lifting path and/or a third lifting path and/or a fourth lifting path.

Alternatively, the first lifting path comprises an arc-wise lifting path.

Alternatively, the lifting path characteristic corresponds to an arc-wise lifting motion, which starts from a lower position of the weighing arrangement and ends at a higher position of the weighing arrangement and/or may regard a point to point motion, wherein the programmable robot apparatus is configured to command the end effector device coupled to the weighing arrangement to follow a pre-determined path corresponding with the lifting path of the weighing arrangement mounted to a movable frame arrangement of a garbage vehicle.

Alternatively, the second lifting path comprises an arc-wise and/or a circular trajectory lifting path.

Alternatively, the lifting path characteristic regards a partial circular and/or circular trajectory motion, wherein the programmable robot apparatus is configured to command the end effector device coupled to the weighing arrangement to follow a pre-determined path corresponding with the lifting path of the weighing arrangement mounted to a movable frame arrangement of a garbage vehicle.

Alternatively, the third lifting path comprises an arc-wise and/or a linear and/or circular trajectory lifting path.

Alternatively, the fourth lifting path forms a series of line segments and/or a series of piecewise linear curve segments and/or arc-wise paths and/or a straight line.

Alternatively, the lifting path characteristic regards a linear and/or circular trajectory motion, wherein the programmable robot apparatus is configured to command the end effector device coupled to the weighing arrangement to follow a pre-determined path traversing a straight line joining two and/or three pre-determined points corresponding with the lifting path of the weighing arrangement mounted to a movable frame arrangement of a garbage vehicle.

Alternatively, the programmable robot apparatus may be adapted to be guided by a control and navigation circuitry in a monitored coordinate system for navigating the end effector device in 3-dimensional space.

Alternatively, the end effector device is used as reference point for said navigation corresponding with a reference point of the movable frame arrangement of a garbage vehicle configured for lifting the load.

Alternatively, the first and/or second and/or third and/or fourth and/or fifth span calibration being performed in a first roll position of the weighing arrangement, wherein the robot unit is configured to make a first roll angle of the weighing arrangement during the motion of the weighing arrangement.

Alternatively, the first roll angle is pre-determined to +7°.

Alternatively, the first and/or second and/or third and/or fourth and/or fifth span calibration being performed in a second roll position of the weighing arrangement, wherein the robot unit is configured to make a second roll angle of the weighing arrangement.

Alternatively, the second roll angle is pre-determined to -7°.

Alternatively, the first and/or second and/or third and/or fourth and/or fifth sequence span calibration being performed in a first pitch position of the weighing arrangement, wherein the programmable robot apparatus is configured to make a first pitch angle of the weighing arrangement during the motion of the weighing arrangement.

Alternatively, the first pitch angle is pre-determined to +7°.

Alternatively, the first and/or second and/or third and/or fourth and/or fifth sequence span calibration being performed in a second pitch position of the weighing arrangement, wherein the programmable robot apparatus is configured to make a second pitch angle of the weighing arrangement.

Alternatively, the second pitch angle is pre-determined to -7°.

Alternatively, the first sequence span calibration and/or fifth sequence span calibration being made without any first and/or second pitch angle.

Alternatively, the first sequence span calibration and/or fifth sequence span calibration being made without any first and/or second roll angle.

Alternatively, the first calibration weight member weighs 2,5 kg.

Alternatively, the second calibration weight member weighs 25 kg.

Alternatively, the third calibration weight member weighs 100 kg.

Alternatively, the fourth calibration weight member weighs 200 kg.

Alternatively, the fifth calibration weight member weighs 300 kg.

Alternatively, the vehicle is a garbage vehicle.

Alternatively, the programmable robot apparatus comprises at least one industrial robot programmed and configured for coupling the end effector device to the weighing arrangement.

Alternatively, the programmable robot apparatus is programmed and configured for lifting the weighing arrangement free of any obstruction.

Alternatively, the programmable robot apparatus is programmed and configured for performing zero weight calibration.

Alternatively, the programmable robot apparatus is programmed and configured for coupling the weighing arrangement to the first and/or second and/or third and/or fourth and/or fifth calibration weight member.

Alternatively, the programmable robot apparatus is programmed and configured for releasing the first and/or second and/or third and/or fourth and/or fifth calibration weight member from the weighing arrangement by rotating the weighing arrangement relatively the first and/or second and/or third and/or fourth and/or fifth calibration weight member in a first rotary motion.

Alternatively, the programmable robot apparatus is programmed and configured for releasing the weighing arrangement from the end effector device by rotating the end effector device relatively the weighing arrangement in a second rotary motion, in opposite and contrary motion to the first rotary motion.

Alternatively, the programmable robot apparatus is adapted to compare the weighing arrangement measured weight value of the first calibration weight member with the actual weight value of the first calibration weight member, which actual weight value is determined by the electrical control circuitry of the weighing arrangement, and which electrical control circuitry is adapted to send a first output data signal regarding the weighing arrangement measured weight value of the first calibration weight member to the calibration circuitry of the programmable robot apparatus via the data communication link.

Alternatively, the programmable robot apparatus is adapted to compare the weighing arrangement measured weight value of the second calibration weight member with the actual weight value of the second calibration weight member, which actual weight value is determined by the electrical control circuitry of the weighing arrangement, and which electrical control circuitry is adapted to send a second output data signal regarding the weighing arrangement measured weight value of the second calibration weight member to the calibration circuitry of the programmable robot apparatus via the data communication link.

Alternatively, the programmable robot apparatus is adapted to compare the weighing arrangement measured weight value of the third calibration weight member with the actual weight value of the third calibration weight member, which actual weight value is determined by the electrical control circuitry of the weighing arrangement, and which electrical control circuitry is adapted to send a third output data signal regarding the weighing arrangement measured weight value of the third calibration weight member to the calibration circuitry of the programmable robot apparatus via the data communication link.

Alternatively, the programmable robot apparatus is adapted to compare the weighing arrangement measured weight value of the fourth calibration weight member with the actual weight value of the fourth calibration weight member, which actual weight value is determined by the electrical control circuitry of the weighing arrangement, and which electrical control circuitry is adapted to send a fourth output data signal regarding the weighing arrangement measured weight value of the fourth calibration weight member to the calibration circuitry of the programmable robot apparatus via the data communication link.

Alternatively, the programmable robot apparatus is adapted to compare the weighing arrangement measured weight value of the fifth calibration weight member with the actual weight value of the fifth calibration weight member, which actual weight value is determined by the electrical control circuitry of the weighing arrangement, and which electrical control circuitry is adapted to send a fifth output data signal regarding the weighing arrangement measured weight value of the fifth calibration weight member to the calibration circuitry of the programmable robot apparatus via the data communication link.

Alternatively, the programmable robot apparatus is programmed and configured for comparing the weighing arrangement measured weight value of the first calibration weight member with the actual weight value of the respective first calibration weight member provided by the electrical control circuitry of the weighing arrangement, which electrical control circuitry is adapted to send a first output data signal regarding the weighing arrangement measured weight value to the calibration circuitry of the programmable robot apparatus via the data communication link.

The electrical control circuitry is further adapted to register the weighing arrangement measured weight value.

The method is performed by means of a programmable robot apparatus (not shown) comprising a control circuitry adapted for controlling the operation of the programmable robot apparatus, an end effector device configured to be releasable coupled to the weighing arrangement, a calibration circuitry adapted for electrical communication with the electrical control circuitry via a data communication link; wherein the calibration circuitry is set to register an actual weight value of a first calibration weight member.

Alternatively, the calibration circuitry is electrically coupled to the control circuitry via an electronic communication line.

Alternatively, the electrical control circuitry of the weighing arrangement is adapted to send a first output data signal regarding the weighing arrangement measured weight value of the first calibration weight member to the calibration circuitry via said data communication link.

Alternatively, the calibration circuitry is adapted for comparing the weighing arrangement measured weight value registered by the electrical control circuitry with the actual weight value of the first calibration weight member registered by the calibration circuitry.

Alternatively, the calibration circuitry is adapted to process the weighing arrangement measured weight value registered by the electrical control circuitry (and received from the electrical control circuitry via the data communication link) into a weight estimate value, wherein the calibration circuitry is adapted to send a first input signal regarding the weight estimate value to the electrical control circuitry.

Alternatively, the weight estimate value corresponds to the actual weight value and/or a to a difference weight value regarding a difference between the actual weight value and the weighing arrangement measured weight value.

Alternatively, the calibration circuitry is adapted for sending the weight estimate value to the electrical control circuitry via the data communication link.

Alternatively, the electrical control circuitry is adapted to register and/or process the weight estimate value (e.g. the actual weight value and/or the difference weight value) into a calibrated (adjusted) weight value regarding the first calibration weight member.

Alternatively, the electrical control circuitry is adapted for adjusting the weighing arrangement measured weight value to an adjusted weighing arrangement measured weight value regarding the first calibration weight member.

Alternatively, the motion control circuitry adapted for controlling the operation of the programmable robot apparatus is configured to release the first calibration weight member from the weighing arrangement.

Alternatively, the motion control circuitry adapted for controlling the operation of the programmable robot apparatus is configured to release the weighing arrangement from the end effector device.

Alternatively, the weighing arrangement is configured to be releasable coupled to a first calibration weight member by means of a calibration weight member-weighing arrangement coupling tool member.

Alternatively, the end effector device configured to be releasable coupled to the weighing arrangement by means of a weighing arrangement-end effector coupling tool member.

Alternatively, the electrical control circuitry is adapted for sending the adjusted weighing arrangement measured weight value to a communication hub of a garbage vehicle by means of a first calibration weight signal via a vehicle data communication link.

Alternatively, the data communication link is configured to be coupled between an electrical control circuitry plug-in member of the weighing arrangement and an electrical calibration circuitry plug-in member of the programmable robot apparatus.

Alternatively, the vehicle data communication link of the garbage vehicle is configured to be coupled to the electrical control circuitry plug-in member of the weighing arrangement.

Alternatively, the first and/or second and/or third and/or fourth and/or fifth first sequence span calibration being repeated at least 2-10 times or more.

Alternatively, the first and/or second and/or third and/or fourth and/or fifth sequence span calibration being performed by lifting the first and/or second and/or third and/or fourth and/or fifth calibration weight member according to a pre-determined lifting path provided by the programmable robot apparatus.

Alternatively, the repetition sequence corresponds with a repetition of ten lifting sequences of the respective first and/or second and/or third and/or fourth and/or fifth calibration weight member.

Alternatively, the actual weight value of the calibration weight member coupled to the weighing arrangement is registered by the calibration circuitry of the programmable robot apparatus, wherein, during calibration, an output data signal regarding the weighing arrangement measured weight value of the calibration weight member, registered by the electrical control circuitry, is transferred to the calibration circuitry of the programmable robot apparatus via the data communication link.

Alternatively, an input data signal regarding the actual weight value is sent from the calibration circuitry to the electrical control circuitry of the weighing arrangement, wherein input data is registered by the electrical control circuitry for that specific weighing arrangement measured weight value.

Alternatively, the calibration is repeated with different calibration weight members, each having a known actual weight value, to create a calibration curve stored in the electrical control circuitry and which calibration curve is calculated by means of the electrical control circuitry and/or the calibration circuitry taking into account the (first and/or second and/or third and/or fourth and/or fifth) input and/or output data signal during the method of calibration.

Alternatively, the calibration curve is used by the electrical control circuitry to determine the weight of a load affecting the calibrated weighing arrangement.

Alternatively, the calibrated weighing arrangement is to be mounted to a movable (lifting) frame arrangement of the garbage vehicle.

Alternatively, the lifting path provided by the movable (lifting) frame arrangement of the garbage vehicle during lifting the garbage can for emptying may correspond with the lifting path characteristic provided by the programmable robot apparatus used in the calibration method.

The calibrated weighing arrangement mounted at the movable (lifting) frame arrangement thus is adapted to compensate in case the lifting path is subjected to any roll angle or pitch angle of the garbage vehicle due to the fact that the garbage vehicle is parked in a slope or similar.

**In** such a way is achieved that an applied load measured by the calibrated weighing arrangement can be measured within accepted tolerances.

Alternatively, the electrical control circuitry is configured to be run with various weight members having different weights to ensure that the calibrated weighing arrangement provides correct weight measurements across a wide range of weights and lifting speeds.

This or at least one of said objects has been achieved by a calibration configuration that is characterized by the features of claim 9.

Alternatively, the calibration circuitry and/or the electrical control circuitry being adapted to compare said weighing arrangement measured weight value of the first calibration weight member with the actual weight value of the first calibration weight member, for providing an adjusted weighing arrangement measured weight value corresponding with the actual weight value of the first calibration weight member.

Alternatively, the calibration configuration comprises a weighing arrangement configured for dynamic weighing of a load; which weighing arrangement comprises; a proximity sensor adapted to detect a distance measure; an electrical control circuitry coupled to the proximity sensor and configured to convert the distance measure to a weighing arrangement measured weight value of the load; the electrical control circuitry is further adapted to register the weighing arrangement measured weight value.

Alternatively, the calibration configuration comprises a programmable robot apparatus comprising; an end effector device configured to be releasable coupled to the weighing arrangement by means of a weighing arrangement-end effector coupling tool member;
- the weighing arrangement is configured to be releasable coupled to a first calibration weight member by means of a calibration weight member-weighing arrangement coupling tool member; a calibration circuitry of the programmable robot apparatus is adapted for electrical communication with the electrical control circuitry via a data communication link; a motion control circuitry adapted for controlling the operation of the programmable robot apparatus; the electrical control circuitry of the weighing arrangement is adapted to send a first output data signal regarding the weighing arrangement measured weight value of the first calibration weight member to the calibration circuitry via said data communication link; the calibration circuitry is adapted to register an actual weight value of the first calibration weight member; and the calibration circuitry and/or the electrical control circuitry being adapted to process the weighing arrangement measured weight value of the first calibration weight member and the actual weight value of the first calibration weight member, and/or being adapted to compare said weighing arrangement measured weight value of the first calibration weight member with the actual weight value of the first calibration weight member, for providing an adjusted weighing arrangement measured weight value corresponding with the actual weight value of the first calibration weight member; the electrical control circuitry is adapted to register the adjusted weighing arrangement measured weight value of the first calibration weight member in a memory circuitry of the electrical control circuitry of the weighing arrangement.

Alternatively, the motion control circuitry is configured to couple the end effector device to the weighing arrangement, to lift the weighing arrangement free of any obstruction, to perform zero weight calibration, to couple the weighing arrangement to the first calibration weight member, to lift the first calibration weight member free of any obstruction by means of the end effector device, to perform a first sequence span calibration by lifting the first calibration weight member according to a lifting path characteristic, and to release the first calibration weight member from the weighing arrangement.

Alternatively, the calibration circuitry is adapted to send a first input data signal to the electrical control circuitry regarding the adjusted weighing arrangement measured weight value of the first calibration weight member via said data communication link.

Alternatively, the programmable robot apparatus is adapted to compare the weighing arrangement measured weight value of the first calibration weight member with the actual weight value of the first calibration weight member.

Alternatively, at least one industrial robot and/or the calibration circuitry of the programmable robot apparatus being programmed and configured for adjusting the weighing arrangement measured weight value to the actual weight value of the first calibration weight member, and being programmed and configured to send a first input data signal regarding the actual weight value of the first calibration weight member from the calibration circuitry to the electrical control circuitry of the weighing arrangement via the data communication link.

Alternatively, the at least one industrial robot and/or the calibration circuitry of the programmable robot apparatus being programmed and configured for adjusting the weighing arrangement measured weight value to the actual weight value of the second calibration weight member, and being programmed and configured to send a second input data signal regarding the actual weight value of the second calibration weight member from the calibration circuitry to the electrical control circuitry of the weighing arrangement via the data communication link.

Alternatively, the calibration circuitry and/or the electrical control circuitry being adapted to process the weighing arrangement measured weight value of the second calibration weight member and the actual weight value of the second calibration weight member, and/or being adapted to compare said weighing arrangement measured weight value of the second calibration weight member with the actual weight value of the second calibration weight member, for providing an adjusted weighing arrangement measured weight value corresponding with the actual weight value of the second calibration weight member.

Alternatively, the electrical control circuitry is adapted to receive a second input data signal from the calibration circuitry for registering the adjusted weighing arrangement measured weight value of the second calibration weight member in the memory circuitry of the electrical control circuitry of the weighing arrangement.

Alternatively, the at least one industrial robot and/or the calibration circuitry of the programmable robot apparatus being programmed and configured for adjusting the weighing arrangement measured weight value to the actual weight value of the third calibration weight member, and being programmed and configured to send a third input data signal regarding the actual weight value of the third calibration weight member from the calibration circuitry to the electrical control circuitry of the weighing arrangement via the data communication link.

Alternatively, the at least one industrial robot and/or the calibration circuitry of the programmable robot apparatus being programmed and configured for adjusting the weighing arrangement measured weight value to the actual weight value of the fourth calibration weight member, and being programmed and configured to send a fourth input data signal regarding the actual weight value of the fourth calibration weight member from the calibration circuitry to the electrical control circuitry of the weighing arrangement via the data communication link.

Alternatively, the at least one industrial robot and/or the calibration circuitry of the programmable robot apparatus being programmed and configured for adjusting the weighing arrangement measured weight value to the actual weight value of the fifth calibration weight member, and being programmed and configured to send a fifth input data signal regarding the actual weight value of the fifth calibration weight member from the calibration circuitry to the electrical control circuitry of the weighing arrangement via the data communication link.

Alternatively, the motion control circuitry of the programmable robot apparatus is programmed and configured for lifting the first and/or second and/or third and/or fourth and/or fifth calibration weight member free of any obstruction.

Alternatively, the motion control circuitry and/or the calibration circuitry of the programmable robot apparatus being programmed and configured for performing a first and/or second and/or third and/or fourth and/or fifth sequence span calibration by lifting the first and/or second and/or third and/or fourth and/or fifth calibration weight member according to a lifting path characteristic.

Alternatively, the motion control circuitry and/or the calibration circuitry of the programmable robot apparatus being programmed and configured for comparing the weighing arrangement measured weight value of the first and/or second and/or third and/or fourth and/or fifth calibration weight member with the actual weight value of the respective first and/or second and/or third and/or fourth and/or fifth calibration weight member.

Alternatively, the calibration circuitry of the programmable robot apparatus is programmed and configured for transferring input data signal to the electrical control circuitry regarding the actual weight value of the respective first and/or second and/or third and/or fourth and/or fifth calibration weight member.

Alternatively, the motion control circuitry of the programmable robot apparatus is programmed and configured for releasing the first and/or second and/or third and/or fourth and/or fifth calibration weight member from the weighing arrangement.

Alternatively, the motion control circuitry of the programmable robot apparatus is adapted to couple the respective calibration weight member to/from the weighing arrangement and calibration weight members being positioned at a pre-determined position in the calibration configuration and reachable by the end effector device.

Alternatively, the end effector device is configured to be releasable coupled to the weighing arrangement by means of a weighing arrangement-end effector coupling tool member.

Alternatively, the end effector device comprises a weighing arrangement-end effector coupling tool member, which is configured for releasable coupling of the weighing arrangement to the end effector device.

Alternatively, the weighing arrangement-end effector coupling tool member comprises a first fastening mechanism, such as a bayonet mount, comprising a first and second coupling part.

Alternatively, the first coupling part comprises one or more radial pins of a cylindrical male portion and the second coupling part comprising at least one L-shaped slot and a spring of a mating female portion for locking the portions to each other.

Alternatively, the first coupling part is mounted to the end effector device or to the weighing arrangement.

Alternatively, the first coupling part may be a controllable coupling mechanism of the end effector device configured to couple and hold the weighing arrangement to the end effector device for performing the dynamic weighing and calibration of the weighing arrangement.

Alternatively, the controllable coupling mechanism of the end effector device is configured to be controlled by the motion control circuitry of the programmable robot apparatus.

Alternatively, the lifting path characteristic is performed alternately in a first and/or second roll position of the weighing arrangement and/or alternately being performed in a first and/or a second pitch position of the weighing arrangement.

Alternatively, the programmable robot apparatus is adapted to command the calibration circuitry to register the actual weight value of the first calibration weight member associated with the step of coupling the weighing arrangement to the first calibration weight member by means of the end effector device.

Alternatively, the programmable robot apparatus is adapted to command the calibration circuitry to register the actual weight value of the second calibration weight member associated with the step of coupling the weighing arrangement to the second calibration weight member.

Alternatively, the programmable robot apparatus is adapted to command the calibration circuitry to register the actual weight value of the third calibration weight member associated with the step of coupling the weighing arrangement to the third calibration weight member.

Alternatively, the programmable robot apparatus is adapted to command the calibration circuitry to register the actual weight value of the fourth calibration weight member associated with the step of coupling the weighing arrangement to the fourth calibration weight member.

Alternatively, the programmable robot apparatus is adapted to command the calibration circuitry to register the actual weight value of the fifth calibration weight member associated with the step of coupling the weighing arrangement to the fifth calibration weight member.

Alternatively, the first coupling part may be a grip mechanism of the end effector device configured to grip and hold the weighing arrangement during the calibration of the weighing arrangement.

Alternatively, the second coupling part is mounted to the end effector device or to the weighing arrangement.

Alternatively, the programmable robot apparatus is programmed and configured for releasable coupling of the end effector device to the weighing arrangement by moving the first coupling part into engagement with the second coupling part.

Alternatively, the programmable robot apparatus is programmed and configured for releasing the first and/or second and/or third and/or fourth and/or fifth calibration weight member from the weighing arrangement.

Alternatively, the weighing arrangement comprises a calibration weight member-weighing arrangement coupling tool member, which is configured for releasable coupling of the first and/or second and/or third and/or fourth and/or fifth calibration weight member to the weighing arrangement.

Alternatively, the calibration weight member-weighing arrangement coupling tool member comprises a second fastening mechanism, such as a bayonet mount, comprising a first and second coupling portion.

Alternatively, the first coupling portion comprises one or more radial pins of a cylindrical male portion and the second coupling portion comprising at least one L-shaped slot and a spring of a mating female portion for locking the portions to each other.

Alternatively, the first coupling portion is mounted to the weighing arrangement or to the first and/or second and/or third and/or fourth and/or fifth calibration weight member.

Alternatively, the second coupling portion is mounted to the weighing arrangement or to the first and/or second and/or third and/or fourth and/or fifth calibration weight member.

Alternatively, the programmable robot apparatus is programmed and configured for releasable coupling of the weighing arrangement to the first and/or second and/or third and/or fourth and/or fifth calibration weight member.

Alternatively, the first and/or second fastening mechanism respectively comprises a screw member of a first coupling portion and a mating female thread bore.

Alternatively, the weighing arrangement comprises a block element having a U-shaped cavity formed of a first section, wherein a second section of the block element is joined to the first section via a third section. The first section and the second section each extends toward a free end opposite the third section.

Alternatively, the inductive distance measuring sensor, the electrical control circuitry, the compensation control circuitry unit are fully or in part encompassed within the block element.

Alternatively, the block element is covered by a sealing cover.

Alternatively, the block element covers the proximity sensor and the electrical control circuitry.

**In** such way, the weighing arrangement is made compact and comprises all electrical components necessary for dynamic weighing and the proximity sensor, which weighing arrangement is calibrated and ready to use.

Alternatively, the inductive distance measuring sensor is rigidly coupled to the block element.

Alternatively, the first section is flexible, wherein the load affected by gravity will cause a bending moment to the first section.

Alternatively, a gap is formed between the first section and the inductive distance measuring sensor, which gap decreases when said bending moment affects the first section.

Alternatively, the gap exhibits a width (gap measure), which is variable and which corresponds with a gap distance to be measured by the inductive distance measuring sensor.

Alternatively, the gap between a first section plane of the first section and an end surface of a magnetically conductive core of the inductive distance measuring sensor will vary depending upon the applied load to the weighing arrangement and the motion pattern of the weighing arrangement when weighing the load under motion.

Alternatively, an opposite end of the inductive distance measuring sensor and/or the proximity sensor functioning as a stop member stopping the first section to deflect over a certain degree thus avoiding fraction of the block element.

Alternatively, the electrical control circuitry is configured to record the calibration process, including both output data and input data, eventual adjustments made to the calibration configuration, and eventual results of any tests that were performed.

Alternatively, the proximity sensor (e.g. an inductive distance measuring sensor) comprises a magnetic field measuring control circuitry configured to regulate an electrical current fed to a coil arrangement of the magnetically conductive core for maintaining a generated magnetic field to zero, wherein the magnetic field measuring control circuitry is configured to generate an electrical output signal representative to the gap to be measured.

Alternatively, the inductive distance measuring sensor is mounted to the second section and comprises a magnetically conductive core having a first end surface.

Alternatively, the first end surface of the magnetically conductive core faces an opposite surface belonging to the first section.

Alternatively, the opposite surface of the first section is made magnetic.

Alternatively, the width of the gap will vary in dependency of the magnitude of the bending moment.

Alternatively, the width of the gap varies in dependency of the magnitude of a bending moment produced by the motion of and/or by the respective actual weight of the first and/or second and/or third and/or fourth and/or fifth calibration weight member.

**In** such way there is achieved a robust weighing device due to the fact that flux paths emanating from a magnetically conductive core will be stable and unaffected in case of rough handling and harsh environment of a garbage vehicle.

**In** such way there is achieved a compact weighing arrangement comprising means for compensation of acceleration and/or angle alteration per time and/or angle rate of the weighing arrangement due to jerky lifting and/or other non-continuous handling of the movable frame arrangement of the garbage vehicle, which weighing arrangement is suitable to be calibrated by the calibration configuration.

**In** such way there is achieved a compact weighing arrangement configured for calculation the actual weight of the applied load taking into account the actual angle that the weighing arrangement has rotated from a lower position to a higher position, which actual angle determines the bending moment acting on the flexible portion.

**In** such way there is provided a weighing arrangement calibrated by a calibration configuration having reliability and accuracy in functionality and cost-effective production and operation.

This has in different embodiments been achieved by means of a weighing arrangement configured to be mounted on a movable frame arrangement (lift device), the weighing arrangement comprises a flexible portion configured to deform when a load is applied to the flexible portion; a gap sensing detector configured to detect the measure of a gap defined by an upper surface and a lower surface; the flexible portion is coupled to the upper surface and/or the lower surface for providing a measure of the gap upon applied load; an electrical control circuitry coupled to the gap sensing detector and configured to convert said measure to a registered weight of the applied load; wherein the weighing arrangement further comprises an electro-mechanical gyroscope coupled to the electrical control circuitry; the electro-mechanical gyroscope is configured to measure rotational velocity of the weighing arrangement; and the electrical control circuitry is configured to adjust the registered weight to actual weight from changes in rotational velocity.

This or at least one of said objects has been achieved by a data medium characterized by the features of claim 9.

Alternatively, the data medium configured for storing a data program (P) comprises a program code readable by the calibration circuitry of the calibration configuration according to any of claims 9-14 for processing data of the output data signal regarding the weighing arrangement measured weight value; and sending data of the input data signal to the weighing arrangement being subject to calibration, wherein the program code of the data medium comprises a set of instructions which, when executed by the calibration circuitry and the control circuitry, cause the programmable robot apparatus to perform the method steps according to any of claims 1-8.

Alternatively, the lifting of the weighing arrangement by means of the programmable robot apparatus for performing the zero weight calibration, without any calibration weight member coupled thereto, may be called static weighing or static calibration weighing.

Alternatively, the lifting of the weighing arrangement coupled to the calibration weight member for providing the lifting path characteristic may be called dynamic weighing or dynamic calibration weighing.

The wording "garbage vehicle" may mean "garbage truck.

The wording "movable frame" may mean "movable frame arrangement".

The wording "calibration configuration" may mean "weighing calibration configuration".

The wording "calibration" may mean "weighing calibration".

### BRIEF DESCRIPTION OF THE DRAWINGS

The present invention will now be described by way of examples with references to the accompanying schematic drawings, of which:
Fig. 1 illustrates a calibration configuration according to a first example;
Figs. 2a-2d illustrate a calibration configuration according to a second example;
Figs. 3a to 3b illustrate a calibration configuration according to a third example;
Fig. 4a illustrates a calibration configuration according to a fourth example;
Fig. 4b illustrates an exemplary lifting path of a sequence span calibration;
Fig. 5 illustrates a weighing arrangement of a calibration configuration according to a fifth example;
Fig. 6 illustrates a weighing arrangement of a calibration configuration according to a sixth example;
Fig. 7 illustrates a calibration configuration according to a seventh example for calibration of a weighing arrangement to be mounted to a garbage vehicle;
Fig. 8 illustrates a calibration configuration according to a further example;
Fig. 9 illustrates a flowchart showing an exemplary method of calibration of a weighing arrangement configured for dynamic weighing;
Fig. 10 illustrates a flowchart showing an exemplary method of calibration of a weighing arrangement configured for dynamic weighing;
Fig. 11 illustrates a calibration circuitry of the calibration configuration according to a further example; and
Fig. 12 illustrates a calibration configuration according to a further example.

### DETAILED DESCRIPTION

Hereinafter, exemplary embodiments of the present invention will be described with reference to the accompanying drawings, wherein for the sake of clarity and understanding of the invention some details of no importance may be deleted from the drawings.

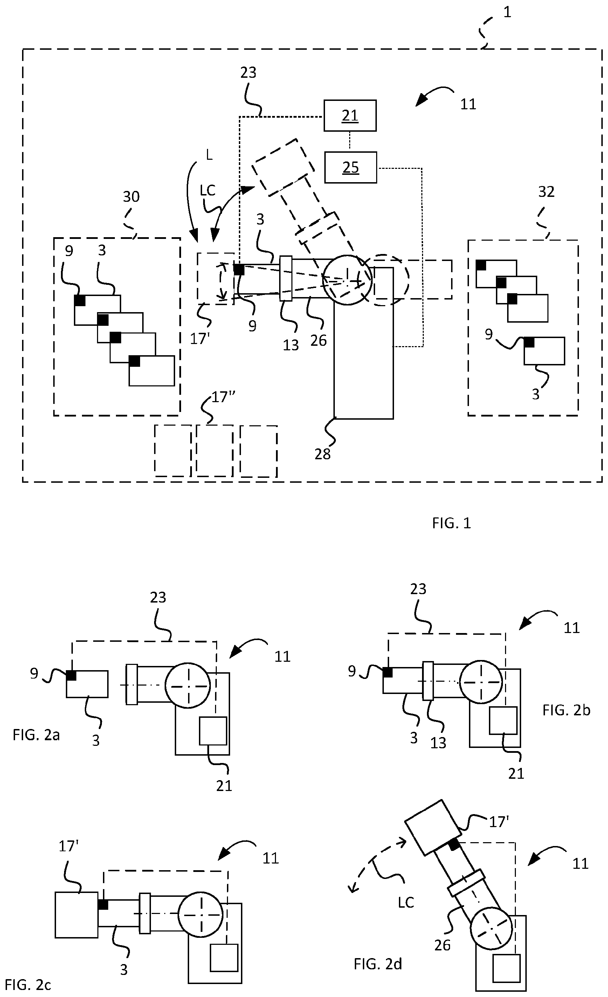

Fig. 1 illustrates a calibration configuration 1 according to a first example. The calibration configuration 1 comprises a weighing arrangement 3 configured for dynamic weighing of a load L. The weighing arrangement 3 comprises a proximity sensor (not shown) adapted to detect a distance measure (not shown).

Alternatively, the weighing arrangement 3 comprises a block member (not shown) comprising a flexible portion (not shown) configured to deform when the load L affects the flexible portion.

Alternatively, the proximity sensor is rigidly mounted to the block member and is configured to detect the distance measure between an upper surface of a sensing portion (not shown) of the proximity sensor and a lower surface (not shown) of the flexible portion.

Alternatively, the proximity sensor is rigidly mounted to the block member and is configured to detect the distance measure between a lower surface (not shown) of a sensing portion of the proximity sensor and an upper surface (not shown) of the flexible portion.

Alternatively, the distance measure corresponds to a gap (not shown) to be measured.

Alternatively, a stop element (not shown) of the weighing arrangement 3 functions as a stop member and is configured to hinder the flexible portion to deflect over a certain degree thus avoiding fraction of the block member.

Alternatively, the block member comprises a U-shaped cavity (not shown) formed by the flexible portion and an opposite portion of the block member, wherein the opposite portion is positioned opposite the flexible portion and is joined to the flexible portion via a third portion.

Alternatively, the flexible portion and the opposite portion each extends toward a free end of the block member opposite the third section.

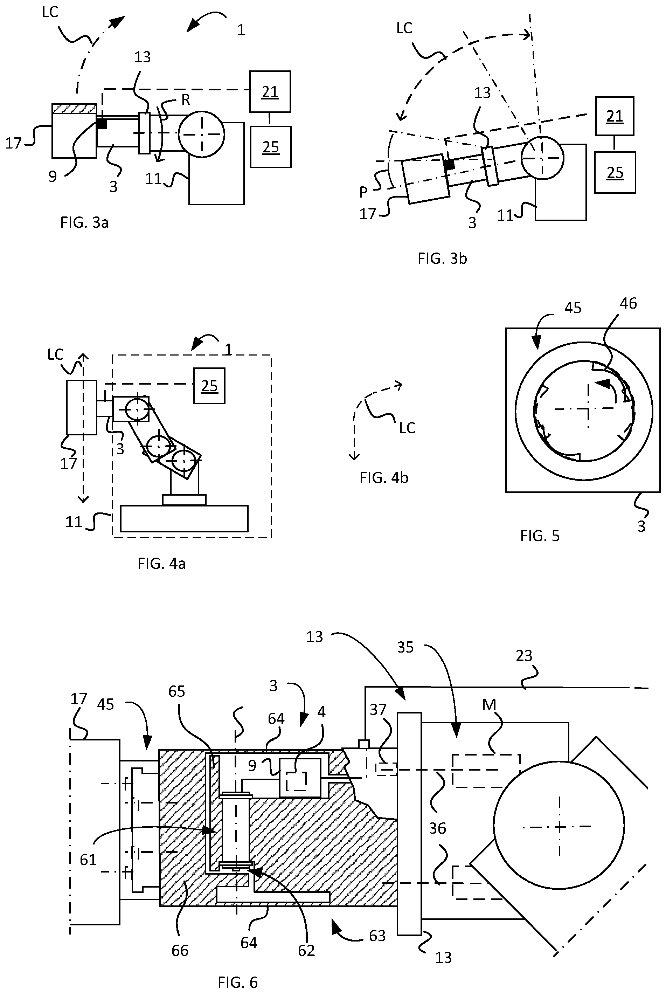

Furthermore, the Fig. 1 illustrates an electrical control circuitry 9 of the weighing arrangement 3 that is coupled to the proximity sensor (not shown) and is configured to convert the distance measure to a weight value of the load. The weighing arrangement 3 further comprises a compensation control circuitry (not shown, see e.g. reference 4 in Fig. 6)) electronically coupled to the electrical control circuitry 9. The compensation control circuitry is adapted to adjust the weight value into a weighing arrangement measured weight value by compensating for acceleration and/or angle alteration per time and/or angle rate of the weighing arrangement during the dynamic weighing.

The electrical control circuitry 9 is further adapted to register the weighing arrangement measured weight value. The calibration configuration 1 further comprises a programmable robot apparatus 11. The programmable robot apparatus 11 comprises an end effector 13 configured to be releasable coupled to the weighing arrangement 3 by means of a weighing arrangement-end effector coupling tool (reference 15 in Fig. 6).

The weighing arrangement 3 is configured to be releasable coupled to a first calibration weight member 17' by means of a calibration weight member-weighing arrangement coupling tool (reference 19 in Fig. 6).

The programmable robot apparatus 11 comprises a calibration circuitry 21, which is adapted for electrical communication with the electrical control circuitry 9 via a data communication link 23. The electrical control circuitry 9 of the weighing arrangement 3 is adapted to send a first output data signal (not shown) regarding the weighing arrangement measured weight value of the first calibration weight member 17' to the calibration circuitry 21 via the data communication link 23.

The calibration circuitry 21 is adapted to register an actual weight value of the first calibration weight member 17'. The calibration circuitry 21 is further adapted to send a first input data signal (not shown) to the electrical control circuitry 9 regarding the actual weight value of the first calibration weight member 17' via the data communication link 23.

Alternatively, the calibration configuration 21 is electrically coupled to a motion control circuitry 25 of the programmable robot apparatus 11. Alternatively, the motion control circuitry 25 is configured to perform at least a first sequence span calibration by lifting the first calibration weight according to a lifting path characteristic LC. Alternatively, the lifting path characteristic LC is programmed into the motion control circuitry 25, e.g. as an application program which is a self-contained program that performs said lifting path characteristic LC.

The programmable robot apparatus 11 comprises a fundament 28 and a robot arm 26 comprising the end effector 13. The robot arm 26 is configured to perform the lifting path characteristic LC.

Reference 30 denotes a set of weighing arrangements 3, which have been prepared to be coupled to the end effector 13 by means of the weighing arrangement-end effector coupling tool, and are configured to be separately calibrated one after another.

Alternatively, each weighing arrangement 3 is prepared to be coupled to the end effector 13 by mounting a first coupling part to the weighing arrangement 3 to be calibrated.

Alternatively, the end effector 13 comprises a second coupling part mating the first coupling part.

Alternatively, reference 32 denotes a set of weighing arrangements 3 that has been calibrated and which are ready to be delivered to a costumer (not shown) after demounting the first coupling part from the calibrated weighing arrangement 3.

Furthermore, the calibration circuitry of the calibration configuration 1 may be adapted to register an actual weight value of a second calibration weight member.

Alternatively, the weighing arrangement 3 may be configured to be releasable coupled to a second calibration weight member 17" by means of the calibration weight member-weighing arrangement coupling tool.

Alternatively, the electrical control circuitry 9 is adapted to send a second output data signal regarding the weighing arrangement measured weight value of the second calibration weight member 17" to the calibration circuitry 21 via said data communication link 23.

Alternatively, the calibration circuitry 21 is adapted to register an actual weight value of the second calibration weight member 17".

Alternatively, the calibration circuitry 21 is adapted to send a second input data signal to the electrical control circuitry 9 regarding the actual weight value of the second calibration weight member 17" via the data communication link 23.

Alternatively, the calibration circuitry 21 and/or the electrical control circuitry 9 being configured for processing the weighing arrangement measured weight value of the first calibration weight member and the actual weight value of the first calibration weight member, for providing an adjusted weighing arrangement measured weight value corresponding with the actual weight value.

Alternatively, the calibration circuitry 21 and/or the electrical control circuitry 9 being configured for comparing said weighing arrangement measured weight value with said actual weight value for providing the adjusted weighing arrangement measured weight value corresponding with the actual weight value. Alternatively, the electrical control circuitry 9 is adapted to register the adjusted weighing arrangement measured weight value in a memory circuitry of the electrical control circuitry of the weighing arrangement.

The weighing arrangement is released from the first calibration weight member after the calibration steps.

Alternatively, there is provided processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

Figs. 2a-2d illustrate a calibration configuration according to a second example. Fig. 2a shows coupling of a data communication link 23 to an electrical control circuitry 9 of a weighing arrangement 3. Alternatively, the coupling of the data communication link 23 to the weighing arrangement 3 may be provided by a programmable robot apparatus 11.

Fig. 2b shows coupling of the weighing arrangement 3 to an end effector 13 of the programmable robot apparatus 11.

Fig. 2c shows coupling of a first calibration weight member 17' to the weighing arrangement 3.

Fig. 2d shows a calibration sequence performed by the programmable robot apparatus 11, wherein a robot arm 26 of the programmable robot apparatus 11 performs a lifting motion of the first calibration weight member 17' for providing a lifting path characteristic LC.

Figs. 3a to 3b illustrate a calibration configuration according to a third example.

Fig. 3a illustrates a calibration configuration 1. The calibration configuration 1 comprises a programmable robot apparatus 11, which is adapted to calibrate a.weighing arrangement 3 configured for dynamic weighing of a load. The weighing arrangement 3 comprises a proximity sensor (not shown) adapted for dynamic weighing.

Alternatively, the proximity sensor is rigidly mounted to a block member and is configured to detect a distance measure. Alternatively, the distance measure corresponds to a gap (not shown) to be measured.

Fig. 3a further illustrates an electrical control circuitry 9 of the weighing arrangement 3 that is electrically coupled to the proximity sensor and is configured to convert the distance measure to a weight value of the load. The weighing arrangement 3 further comprises a compensation control circuitry (not shown) electronically coupled to the electrical control circuitry 9. The compensation control circuitry is adapted to adjust the weight value into a weighing arrangement measured weight value by compensating for acceleration and/or angle alteration per time and/or angle rate of the weighing arrangement during the dynamic weighing. The weighing arrangement 3 is coupled to an end effector 13 of the programmable robot apparatus 11.

Alternatively, a calibration configuration 21 is electrically coupled to a motion control circuitry 25 of the programmable robot apparatus 11.

A weighing arrangement-end effector coupling tool member (not shown) of the end effector 13 is configured for releasable coupling of the weighing arrangement 3 to the end effector 13.

The weighing arrangement 3 is provided with a coupling tool member (not shown) is configured for releasable coupling of a first calibration weight member 17 to the weighing arrangement 3.

Alternatively, the motion control circuitry 25 is configured to perform at least a first sequence span calibration by lifting the first calibration weight according to a lifting path characteristic LC. Alternatively, the lifting path characteristic LC is programmed into the motion control circuitry 25. Alternatively, the lifting path characteristic LC is programmed into the motion control circuitry 25, e.g. as an application program which is a self-contained program that performs said lifting path characteristic LC.

The first sequence span calibration comprises rolling R the weighing arrangement 3 to a predetermined angle, and subsequently performing the first sequence span calibration by lifting the first calibration weight member 17 according to the lifting path characteristic LC.

Fig. 3b illustrates the calibration configuration 1 in Fig. 3a. The weighing arrangement-end effector coupling tool member (not shown) of the end effector 13 holds the weighing arrangement 3. A calibration weight member-weighing arrangement coupling tool member (not shown) is coupled to a first calibration weight member 17 to the weighing arrangement 3.

Alternatively, the motion control circuitry 25 is configured to perform at least a first sequence span calibration by lifting the first calibration weight 17 according to a lifting path characteristic LC.

The first sequence span calibration comprises pitching P the weighing arrangement 3 to a predetermined angle, and subsequently performing the first sequence span calibration by lifting the first calibration weight member 17 according to the lifting path characteristic.

Alternatively, the calibration is repeated with a variety of known calibration weight members to create a calibration curve, which data is stored in the electrical control circuitry. The calibration takes into account output data signal concerning input data signal, such that a load measured by the weighing arrangement 3 always is measured within accepted tolerances. The calibration curve is used by the electrical control circuitry to determine the weight of unknown loads based on the output data signal.

Alternatively, there is provided processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

Fig. 4a illustrates a calibration configuration 1 according to a fourth example. Fig. 4 shows the calibration configuration 1 comprises a programmable robot apparatus 11, which is adapted to calibrate a.weighing arrangement 3 configured for dynamic weighing of a load. The weighing arrangement 3 comprises a proximity sensor (not shown) adapted for dynamic weighing. The weighing arrangement 3 is provided with a coupling tool member (not shown) is configured for releasable coupling of a first calibration weight member 17 to the weighing arrangement 3.

Alternatively, a motion control circuitry 25 of the programmable robot apparatus 11 is configured to perform at least a first sequence span calibration by lifting the first calibration weight 17 according to a lifting path characteristic LC.

Alternatively, the first and/or second and/or third and/or fourth and/or fifth sequence span calibration being performed vertically, wherein the robot unit is configured to make a vertical lifting path of the end effector device.

Alternatively, the lifting path characteristic comprises a first lifting path and/or a second lifting path and/or a third lifting path and/or a fourth lifting path.

Alternatively, the first lifting path comprises an arc-wise lifting path.

Alternatively, the lifting path characteristic corresponds to an arc-wise lifting motion, which starts from a lower position of the weighing arrangement and ends at a higher position of the weighing arrangement and/or may regard a point to point motion, wherein the programmable robot apparatus is configured to command the end effector device coupled to the weighing arrangement to follow a pre-determined path corresponding with the lifting path of the weighing arrangement mounted to a movable frame arrangement of a garbage vehicle.

Alternatively, the second lifting path comprises an arc-wise and/or a circular trajectory lifting path.

The first sequence span calibration performed by the calibration configuration 1 comprises a vertical, linear trajectory lifting path. The performing of the first sequence span calibration by lifting the first calibration weight according to the lifting path characteristic is repeated a pre-determined number of times. Alternatively, the performing of the first sequence span calibration by lifting the first calibration weight 17 according to the lifting path characteristic is repeated a pre-determined number of times.

Alternatively, the calibration is repeated with a variety of known calibration weight members to create a calibration curve, which data is stored in the electrical control circuitry. The calibration takes into account output data signal concerning input data signal, such that a load measured by the weighing arrangement 3 always is measured within accepted tolerances. The calibration curve is used by the electrical control circuitry to determine the weight of unknown loads based on the output data signal.

Alternatively, the calibration is repeated a pre-determined number of times by lifting of the first respective a second and/or a third and/or a fourth and/or a fifth calibration weight according to the lifting path characteristic.

Alternatively, the second and/or third lifting path comprises a linear and/or circular trajectory lifting path as is shown in Fig. 4b.

Fig. 5 illustrates a weighing arrangement 3 of a calibration configuration according to a fifth example, which weighing arrangement 3 is ready to be calibrated.

The weighing arrangement 3 is configured to be releasable coupled to an end effector (not shown in Fig. 5, see reference sign 13 in Fig. 6) of a programmable robot apparatus by means of weighing arrangement-end effector coupling tool member 35 (see Fig. 6).

The weighing arrangement 3 is configured to be releasable coupled to a calibration weight member (not shown in Fig. 5, see reference sign 17 in Fig. 6) by means of a calibration weight member-weighing arrangement coupling tool member 45.

The calibration weight member-weighing arrangement coupling tool member 45 may comprise a bayonet mount having a first and second coupling portion.

The first coupling portion comprises one or more radial extensions 46 of a cylindrical male portion of the weighing arrangement 3 and the second coupling portion comprising at least one slot 47 of a mating female portion of the calibration weight member 17 for locking the portions to each other.

The weighing arrangement-end effector coupling tool member 35 comprises a first and second coupling part. The first coupling part comprises one or more screws 36 configured to be rotated and driven by a respective electrical motor M controlled by the programmable robot apparatus for engagement with a respective mating threaded bore 37 of the second coupling part of the weighing arrangement 3.

The programmable robot apparatus is adapted to, after securing the weighing arrangement 3 to the end effector 13, rotate the weighing arrangement 3 into engagement with the calibration weight member 17, wherein the bayonet mount having a first and second coupling portion is engaged and being configured to secure the calibration weight member 17 to the weighing arrangement 3.

Alternatively, the programmable robot apparatus is programmed and configured for releasable coupling of the end effector 13 to the weighing arrangement 3 by moving the first coupling part into engagement with the second coupling part.

Fig. 6 illustrates a weighing arrangement 3 of a calibration configuration according to a sixth example. The weighing arrangement 3 comprises a proximity sensor 61 adapted to detect a distance measure 62.

Alternatively, the weighing arrangement 3 comprises a block member 63 comprising a flexible portion 64 configured to deform when a load of a calibration weight member 17 coupled to the weighing arrangement 3 affects the weighing arrangement 3 during a lifting path characteristic performed an end effector 13 of a programmable robot apparatus (not shown) for providing calibration. The proximity sensor 61 is rigidly mounted to the block member 63 and is configured to detect the distance measure 62 between an upper surface of a sensing portion of the proximity sensor 61 and a lower surface of the flexible portion 64. The distance measure 62 corresponds to a gap to be measured.

Alternatively, a stop element 65 of the weighing arrangement 3 functions as a stop and is configured to hinder the flexible portion 64 to deflect over a certain degree thus avoiding fraction of the block member 63.

Alternatively, the block member 63 comprises a U-shaped cavity formed by the flexible portions 64, which are joined to each other via a third portion 66.

An electrical control circuitry 9 of the weighing arrangement 3 is configured to be electrically coupled to a calibration circuitry (not shown) of the programmable robot apparatus via a data communication link 23.

The electrical control circuitry 9 is coupled to the proximity sensor 61 and is configured to convert the distance measure 62 to a weight value of the load.

Alternatively, a compensation control circuitry 4 electronically coupled to the electrical control circuitry 9 and adapted to adjust the weight value into a weighing arrangement measured weight value by compensating for acceleration and/or angle alteration per time and/or angle rate of the weighing arrangement during said dynamic weighing.

The electrical control circuitry 9 is adapted to send an output data signal regarding the weighing arrangement measured weight value of the calibration weight member 17 to the calibration circuitry via the data communication link 23.

The calibration circuitry is adapted to register an actual weight value of the calibration weight member 17 by a known pick-up position of the calibration weight member to be coupled to the end effector 13. The calibration circuitry is adapted to send an input data signal to the electrical control circuitry 9 regarding the actual weight value of the calibration weight member via said data communication link 23.

The calibration configuration comprises the weighing arrangement 3 configured for dynamic weighing of a load; which weighing arrangement 3 comprises; a proximity sensor 61 adapted to detect the distance measure 62; the electrical control circuitry 9 coupled to the proximity sensor 61 and configured to convert the distance measure 62 to a weighing arrangement measured weight value of the load. The electrical control circuitry 9 is further adapted to register the weighing arrangement measured weight value. The programmable robot apparatus comprises the end effector device 13 configured to be releasable coupled to the weighing arrangement 3 by means of a weighing arrangement end effector coupling tool member 35. The weighing arrangement 3 is configured to be releasable coupled to a first calibration weight member by means of a calibration weight member weighing arrangement coupling tool member 45.

A calibration circuitry (not shown) of the programmable robot apparatus is adapted for electrical communication with the electrical control circuitry 9 via the data communication link 23. A motion control circuitry (not shown) of the programmable robot apparatus is adapted for controlling the operation of the programmable robot apparatus. The electrical control circuitry 9 of the weighing arrangement 3 is adapted to send a first output data signal regarding the weighing arrangement measured weight value of the first calibration weight member to the calibration circuitry of the programmable robot apparatus via said data communication link 23. The calibration circuitry is adapted to register an actual weight value of the first calibration weight member.

Alternatively, the calibration circuitry and/or the electrical control circuitry being adapted to process the weighing arrangement measured weight value of the first calibration weight member and the actual weight value of the first calibration weight member and the electrical control circuitry 9 is adapted to receive a first input data signal from the calibration circuitry for registering the adjusted weighing arrangement measured weight value of the first calibration weight member in a memory circuitry of the electrical control circuitry 9.

Alternatively, there is provided processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

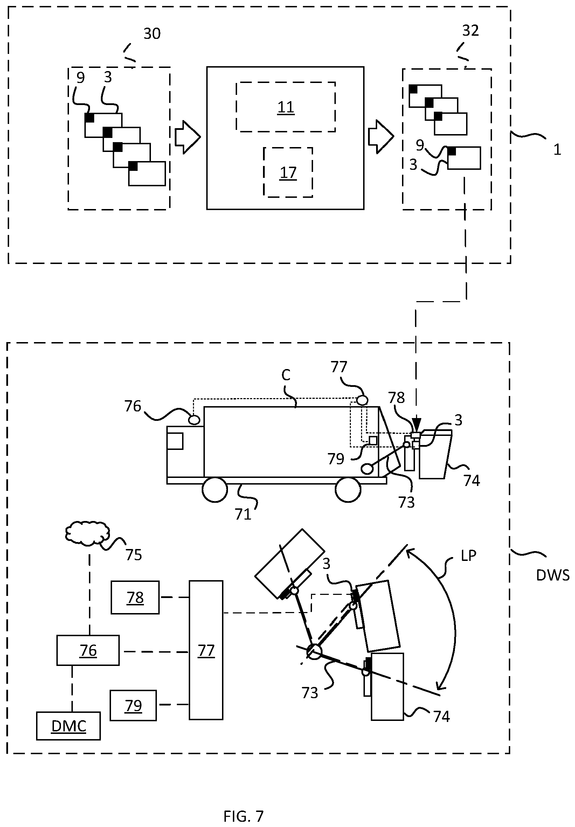

Fig. 7 illustrates a calibration configuration 1 according to a seventh example for calibration of a weighing arrangement 3 to be mounted to a garbage vehicle 71. Alternatively, the calibration configuration 1 comprises a programmable robot apparatus 11 and a set of first calibration weight members 17 of different reference calibration weight members 17, each having a respective actual weight value.

Alternatively, a set 30 of weighing arrangements 3 are prepared to be coupled to an end effector (not shown).

Alternatively, a respective first coupling portion of a weighing arrangement-end effector coupling tool (not shown) is mounted to the respective weighing arrangement 3 to be calibrated.

Alternatively, the programmable robot apparatus 11 is adapted to couple the respective weighing arrangement 3 to be calibrated by coupling an end effector (not shown) of the programmable robot apparatus 11 to the weighing arrangement 3.

Alternatively, a second coupling portion (not shown) of the weighing arrangement-end effector coupling tool is mounted to the respective first coupling portion of the respective weighing arrangement 3 to be calibrated.

Alternatively, the calibration configuration 1 is configured to perform the calibration of the respective weighing arrangement 3 being configured for dynamic weighing of a load.

Alternatively, the programmable robot apparatus 11 is adapted to decouple the respective calibrated weighing arrangement 3 from the end effector.

Alternatively, the programmable robot apparatus 11 is adapted to demount the respective first coupling portion of the respective calibrated weighing arrangement 3 and move the ready-to-use calibrated weighing arrangement 3 to a set 32 of weighing arrangements 3.

A calibration circuitry (not shown) of the programmable robot apparatus is adapted for electrical communication with the electrical control circuitry via a data communication link. A motion control circuitry (not shown) of the programmable robot apparatus 11 is adapted for controlling the operation of the programmable robot apparatus 11. The electrical control circuitry of the weighing arrangement 3 is adapted to send a first output data signal regarding the weighing arrangement measured weight value of the first calibration weight member to the calibration circuitry of the programmable robot apparatus via the data communication link. The calibration circuitry is adapted to register an actual weight value of the first calibration weight member.

Alternatively, the calibration circuitry and/or the electrical control circuitry being adapted to process the weighing arrangement measured weight value of the first calibration weight member and the actual weight value of the first calibration weight member and the electrical control circuitry is adapted to receive a first input data signal from the calibration circuitry for registering the adjusted weighing arrangement measured weight value of the first calibration weight member in a memory circuitry of the electrical control circuitry.

Alternatively, there is provided processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

Alternatively, the set 32 of weighing arrangements 3 that has been calibrated now being ready to be delivered to a costumer (not shown) making use of a fleet of garbage vehicles 71.

Fig. 7 further shows that a delivered calibrated weighing arrangement 3 has been mounted to a movable (lifting) frame arrangement 73 of the garbage vehicle 71. The movable frame arrangement 73 is adapted for lifting a garbage can 74 to an emptying position (not shown) for emptying garbage into a garbage container C of the garbage vehicle 71. The calibrated weighing arrangement 3 of a dynamic weighing system DWS of the garbage vehicle 71 and/or the fleet garbage vehicles 71 being configured for dynamic weighing and provides an actual weight value during lifting of the garbage can 74 to the emptying position. The weighing arrangement 3 is electrically coupled to a router unit 76 via a communication hub 77. A signal regarding the actual weight value being sent to the router unit 76 associated with a data management circuitry of the garbage vehicle 71 and an associated with an Internet cloud 75. The router unit 76 may comprise applications for 4G, Wi-Fi, Bluetooth, GPS, etc.

The communication hub 77 may be connected to a **RFID** antenna 78 configured to read identification data of a specific load of an identified garbage can 74, wherein the identification data is transferred to the router unit 76.

The communication hub 77 may be connected to a display unit 79 comprising a user interface. The user interface comprises necessary information about status of the dynamic weighing system of the garbage vehicle 71. The router unit 76 may be coupled to the data management circuitry DMC.

The movable frame arrangement 73 of the garbage vehicle 71 is configured to make a lifting path LP for emptying the garbage can 74 into the garbage container C.

The lifting path LP provided by the movable (lifting) frame arrangement 73 of the garbage vehicle 71 may correspond with the lifting path characteristic LC provided by the calibration method.

The weighing arrangement 3 thus compensates if the lifting path LP is subjected to any roll angle or pitch angle because the garbage vehicle is not horizontal.

By means of the calibrated weighing arrangement 3, produced by the calibration configuration 1, it is now possibly to mount the calibrated weighing arrangement 3 to the garbage vehicle 71 without any complementary calibration handling.

Consequently, service personnel easily may plug-in the weighing arrangement (already calibrated) to the present communication hub 77 of the garbage vehicle 71.

In such a way there is provided a weighing arrangement 3 that is ready to mount to the movable frame arrangement 73 of the garbage vehicle 71, which weighing arrangement 3 is used for dynamic weighing.

In an eventual case of changing weighing arrangement 3 for maintenance service it is now possibly to mount a new weighing arrangement 3 to the movable frame arrangement 73 without any need for separately calibration of the already calibrated weighing arrangement 3 achieved by the calibration configuration 1.

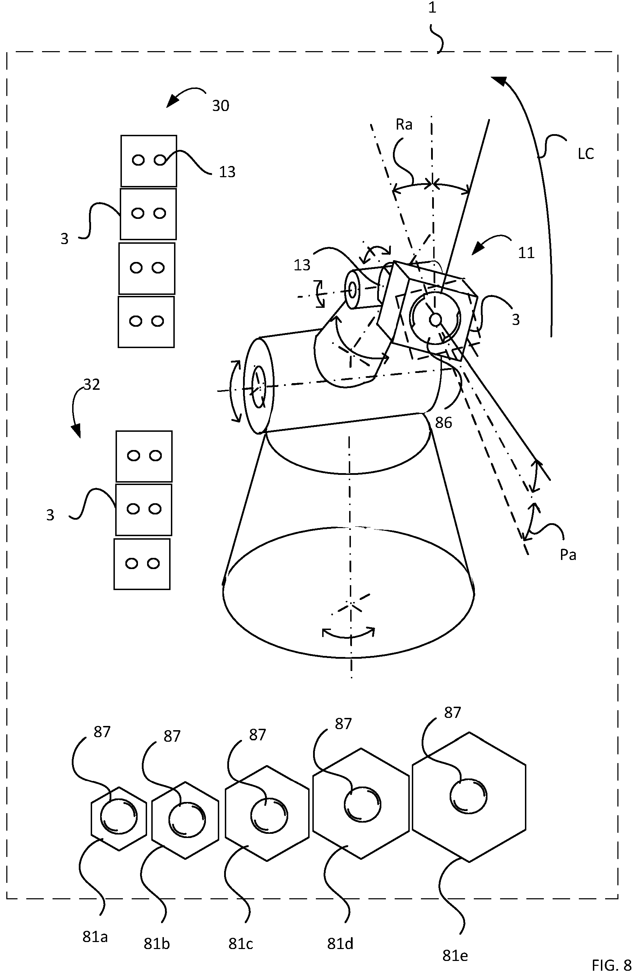

Fig. 8 illustrates a programmable robot apparatus 11 of a calibration configuration 1 according to a further example. The calibration configuration 1 comprises a first, second, third, fourth and fifth calibration weight member 81a, 81b, 81c, 81d, 81e (e.g. 2,5 kg, 25 kg, 100 kg, 200 kg, 300 kg). The calibration configuration 1 further comprises a set 30 of weighing arrangements 3 to be calibrated.

Alternatively, the programmable robot apparatus 11 is programmed and configured for coupling/releasing the weighing arrangement 3 to be calibrated to/from an end effector 13.

Alternatively, the end effector 13 comprises a weighing arrangement-end effector coupling tool member (not shown), which comprises a first and second coupling part.

Alternatively, the first coupling part comprises one or more screws (not shown) configured to be controlled by the programmable robot apparatus 11 for engagement with a mating threaded bore 37 of the weighing arrangement 3.

Alternatively, the first coupling part comprises a grip (not shown) configured to be controlled by the programmable robot apparatus 11 for engagement with a mating extension (not shown) of the weighing arrangement 3.

The programmable robot apparatus 11 is programmed and configured for coupling/releasing the first and/or second and/or third and/or fourth and/or fifth calibration weight member to/from the weighing arrangement.

Alternatively, the weighing arrangement-end effector coupling tool member comprises a fastening mechanism, such as a bayonet mount, comprising a first 86 and second 87 connection member.

Alternatively, the programmable robot apparatus 11 is adapted to command a calibration circuitry (not shown) of the programmable robot apparatus 11 to register the actual weight value of the first calibration weight member associated with the step of coupling the weighing arrangement 3 to the first, second, third, fourth and fifth calibration weight member 81a, 81b, 81c, 81d, 81e.

Alternatively, the method of calibration of the weighing arrangement 3 comprises the steps of coupling the end effector to the weighing arrangement 3, lifting the weighing arrangement 3 free of any obstruction, performing zero weight calibration, without any calibration weight member coupled thereto.

Alternatively, a subsequently step comprises coupling the weighing arrangement 3 to be calibrated to the first calibration weight member 81a, and thereafter the programmable robot apparatus 11 lifts the first calibration weight member free of any obstruction.

Alternatively, the programmable robot apparatus 11 is programmed and configured for performing a first and/or second and/or third and/or fourth and/or fifth sequence span calibration by lifting the first and/or second and/or third and/or fourth and/or fifth calibration weight member 81a, 81b, 81c, 81d, 81e according to a lifting path characteristic LC.

The lifting path characteristic LC may start with a sequence lifting the respective calibration weight member without any roll or pitch angle. This may be done 10 times for calibration.

Alternatively, the programmable robot apparatus 11 is programmed and configured for comparing the actual weight value of the respective first and/or second and/or third and/or fourth and/or fifth calibration weight member 81a, 81b, 81c, 81d, 81e with a registered (adjusted due to dynamic weighing) weight value of the first and/or second and/or third and/or fourth and/or fifth calibration weight member weight by means of the weighing arrangement 3.

Alternatively, the programmable robot apparatus 11 is programmed and configured for transferring the input data signal to an electrical control circuitry of the weighing arrangement 3.

The input data signal regarding the actual weight value of the respective first and/or second and/or third and/or fourth and/or fifth calibration weight member may be transferred to the electrical control circuitry.

Alternatively, a subsequently step of performing a sequence span calibration is made for each calibration weigh member comprises rolling the weighing arrangement 3 to a predetermined angle Ra, and subsequently performing the sequence span calibration by lifting the first, second, third, fourth, fifth calibration weight member 81a, 81b, 81c, 81d, 81e one by one according to the lifting path characteristic.

Alternatively, a subsequently step of performing a sequence span calibration is made for each calibration weigh member comprises pitching the weighing arrangement 3 to a predetermined angle Pa, and subsequently performing the sequence span calibration by lifting the first , second, third, fourth, fifth calibration weight member 81a, 81b, 81c, 81d, 81e one by one according to the lifting path characteristic.

The programmable robot apparatus 11 may be programmed and configured for notifying the weighing arrangement measured weight value of the first, second, third, fourth, fifth calibration weight member 81a, 81b, 81c, 81d, 81e processed by the electrical control circuitry and for transferring an input data signal regarding the actual weight value of the first calibration weight member to the electrical control circuitry of the weighing arrangement 3.

This is made for correcting the weighing arrangement measured weight value to the actual weight value of the first calibration weight member, which actual weight value is recorded by the electrical control circuitry of the weighing arrangement 3 and stored in the electrical control circuitry.

A subsequently step is made for releasing the first, second, third, fourth, fifth calibration weight member 81a, 81b, 81c, 81d, 81e from the calibrated weighing arrangement 3.

Alternatively, the calibration is repeated with the first, second, third, fourth, fifth calibration weight member 81a, 81b, 81c, 81d, 81e, which each exhibits a known weight (e.g. 2,5 kg, 25 kg, 100 kg, 200 kg, 300 kg) by means of the programmable robot apparatus 11 for creating a calibration data database (such as calibration curve data) by means of the calibration circuitry and stored in a memory circuitry, and/or in the electrical control circuitry.

Alternatively, the calibration data database (such as calibration curve data) stored in the memory circuitry and/or in the electrical control circuitry of the weighing arrangement 3 takes into account the input data signal comprising the actual weight value of the respective first, second, third, fourth, fifth calibration weight member 81a, 81b, 81c, 81d, 81e in regard to the respective registered weighing arrangement measured weight value of each calibration weight member.

**In** such a way, a load applied to the calibrated weighing arrangement 3 can be measured within accepted tolerances and a correct weight value can be generated by the weighing arrangement 3 when measuring the weight of a garbage can or other load.

A data medium, configured for storing a data program (P), which data medium comprises a program code readable by the calibration circuitry of the calibration configuration according to claim 9 for processing data of the first output data signal regarding the weighing arrangement measured weight value; and sending data of the first input data signal to the weighing arrangement being subject to calibration; wherein the program code of the data medium comprises a set of instructions which, when executed by the calibration circuitry causes the programmable robot apparatus to perform the method steps according to any of claims 1-8.

A data medium, configured for storing a data program (P), which data medium comprises a program code readable by the calibration circuitry of the calibration configuration according to claim 9 for;
- processing data of the first, a second, a third, a fourth and/or a fifth output data signal regarding the weighing arrangement measured weight value; and
- sending data of the first, a second, a third, a fourth and/or a fifth input data signal to each weighing arrangement being subject to calibration.

Alternatively, the program code of the data medium comprises a set of instructions which, when executed by the calibration circuitry, cause the programmable robot apparatus to perform the method steps according to any of claims 1-8.

A calibration circuitry (not shown) of the programmable robot apparatus is adapted for electrical communication with the electrical control circuitry via a data communication link. A motion control circuitry (not shown) of the programmable robot apparatus 11 is adapted for controlling the operation of the programmable robot apparatus 11. The electrical control circuitry of the weighing arrangement 3 is adapted to send a first output data signal regarding the weighing arrangement measured weight value of the first calibration weight member to the calibration circuitry of the programmable robot apparatus via the data communication link. The calibration circuitry is adapted to register an actual weight value of the first calibration weight member.

Alternatively, the calibration circuitry and/or the electrical control circuitry being adapted to process the weighing arrangement measured weight value of the first calibration weight member and the actual weight value of the first calibration weight member and the electrical control circuitry is adapted to receive a first input data signal from the calibration circuitry for registering the adjusted weighing arrangement measured weight value of the first calibration weight member in a memory circuitry of the electrical control circuitry.

Alternatively, there is provided processing the weighing arrangement measured weight value of the first calibration weight member and the actual weight value of the first calibration weight member is executed, by means of the electrical control circuitry and/or the calibration circuitry, by comparing said weighing arrangement measured weight value of the first calibration weight member with the actual weight value of the first calibration weight member, for providing the adjusted weighing arrangement measured weight value corresponding with the actual weight value of the first calibration weight member.

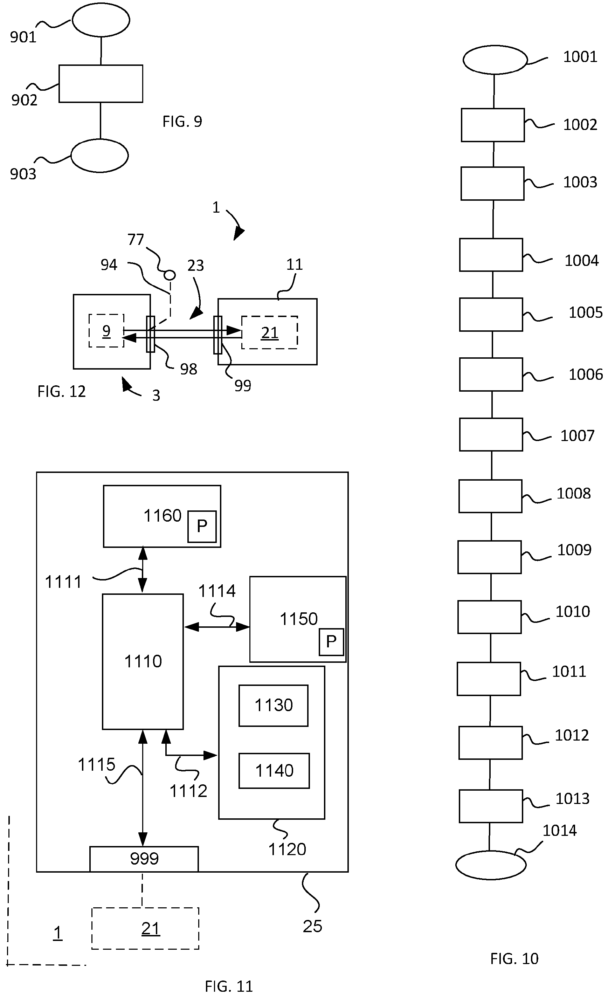

Fig. 9 illustrates a flowchart showing an exemplary method of calibration of a weighing arrangement 3 configured for dynamic weighing of a load by the use of a calibration configuration 1. The weighing arrangement comprises; a proximity sensor adapted to detect a distance measure; an electrical control circuitry coupled to the proximity sensor and configured to convert the distance measure to a weight value of the load; a compensation control circuitry electronically coupled to the electrical control circuitry and adapted to adjust the weight value into an weighing arrangement measured weight value by compensating for acceleration and/or angle alteration per time and/or angle rate of the weighing arrangement during said dynamic weighing; the electrical control circuitry is further adapted to register the weighing arrangement measured weight value; wherein said method is performed by means of a programmable robot apparatus comprising; an end effector device configured to be releasable coupled to the weighing arrangement; a calibration circuitry adapted for electrical communication with the electrical control circuitry via a data communication link; wherein the calibration circuitry is set to register an actual weight value of a first calibration weight member

The method starts at step 901. Step 902 comprises performance of the method. Step 903 comprises stop of the method.

Step 902 may comprise the steps of coupling the end effector device to the weighing arrangement, lifting the weighing arrangement free of any obstruction; performing zero calibration; coupling the weighing arrangement to the first calibration weight member; lifting the first calibration weight member free of any obstruction; performing a first sequence span calibration by lifting the first calibration weight member according to a lifting path characteristic.

Alternatively; there is provided steps of comparing and/or processing the weighing arrangement measured weight value of the first calibration weight member and the actual weight value of the first calibration weight member; adjusting the weighing arrangement measured weight value to the actual weight value of the first calibration weight member; and releasing the weighing arrangement from the first calibration weight member.

Fig. 10 illustrates a flowchart showing an exemplary method of calibration of a weighing arrangement configured for dynamic weighing of a load by the calibration configuration. The method starts at step 1001. Step 1002 comprises coupling the end effector device to the weighing arrangement. Step 1003 comprises lifting the weighing arrangement free of any obstruction. Step 1004 comprises performing zero weight calibration. Step 1005 comprises coupling the weighing arrangement to the first calibration weight member. Step 1006 comprises lifting the first calibration weight member free of any obstruction. Step 1007 comprises performing a first sequence span calibration by lifting the first calibration weight member according to a lifting path characteristic.

Step 1008 comprises performing the first sequence span calibration comprises rolling the weighing arrangement to a predetermined angle, and subsequently performing the first sequence span calibration by lifting the first calibration weight member according to the lifting path characteristic. Step 1009 comprises performing the first sequence span calibration comprises pitching the weighing arrangement to a predetermined angle, and subsequently performing the first sequence span calibration by lifting the first calibration weight member according to the lifting path characteristic.

Step 1010 may comprise coupling the weighing arrangement to the second calibration weight member; lifting the second calibration weight member free of any obstruction; performing a second sequence span calibration by lifting the second calibration weight member according the lifting path characteristic; comparing the weighing arrangement measured weight value of the second calibration member with the actual weight value of the second calibration weight member, and adjusting the weighing arrangement measured weight value to the actual weight (50) value of the second calibration weight member, and releasing the weighing arrangement from the second calibration weight member.

Step 1011 may comprise processing the weighing arrangement measured weight value of the first calibration weight member and the actual weight value of the first calibration weight member. Step 1012 comprises adjusting the weighing arrangement measured weight value to the actual weight value of the first calibration weight member. Step 1013 comprises releasing the weighing arrangement from the first calibration weight member. Step 1014 comprises stop of the method.

Fig. 11 illustrates a motion control circuitry 25 adapted for controlling the operation of a programmable robot apparatus (not shown) and a calibration circuitry 21 adapted for calibration of a weighing arrangement (not shown), which is configured for dynamic weighing of a load by the use of a calibration configuration 1. The motion control circuitry 25 and the calibration circuitry 21 is configured to control an exemplary method herein disclosed. An electrical control circuitry (not shown) of the weighing arrangement is configured to be electrically coupled to the calibration circuitry 21.

The control circuitry 25 may comprise a non-volatile memory NVM 1120, which may be a computer memory that can retain stored information even when the control circuitry 25 not being powered.

Preferably, the motion control circuitry 25 further comprises a processing unit 1110 and a read/write memory 1150. The NVM 1120 comprises a first memory unit 1130. A computer program (which can be of any type suitable for any operational database) is stored in the first memory unit 1130 for controlling the functionality of the control circuitry 25.

Furthermore, the motion control circuitry 25 and/or the calibration circuitry 21 comprises a bus controller (not shown), a serial communication port (not shown) providing a physical interface, through which information transfers separately in two directions. Said circuitries also comprises any suitable type of I/O module (not shown) providing input/output signal transfer, an A/D converter (not shown) for converting continuously varying signals from the sensor devices and different monitoring units (not shown) into binary code suitable to be processed by the circuitries.

The motion control circuitry 25 further may comprise an input/output unit (not shown) for adaption to time and date. The motion control circuitry 25 also may comprise an event counter (not shown) for counting the number of event multiples that occur during motion of an end effector device (not shown) for coupling of a weighing arrangement (not shown) to the end effector device, for coupling of the weighing arrangement to a calibration weight member (not shown) and for lifting the calibration weight member according to a lifting path characteristic.

Furthermore, the motion control circuitry 25 and/or the calibration circuitry 21 may comprise interrupt units (not shown) for providing a multi-tasking performance and real time computing. The NVM 1120 also includes a second memory unit 1140 for external controlled operation.

There is provided a data medium adapted for storing a data program P comprises driver routines adapted for commanding the operating of the programmable robot apparatus.

The data program P is adapted for operating the motion control circuitry 25 and/or the calibration circuitry 21 in performing any exemplary method described herein.

The data program P comprises routines for executing commands for motion of the end effector device, said coupling of the end effector device to the weighing arrangement and for the calibration of the weighing arrangement.

The data program P comprises a program code, which is readable on the motion control circuitry 25 and/or the calibration circuitry 21, for causing the motion control circuitry 25 and/or the calibration circuitry 21 to perform the exemplary method steps herein described.

The data program P further may be stored in a separate memory 1160 and/or in a read/write memory 1150. The data program P may be stored in executable or compressed data format.

It is to be understood that when the processing unit 1110 is described to execute a specific function that involves that the processing unit 1110 executes a certain part of the program stored in the separate memory 1160 or a certain part of the program stored in the read/write memory 1150.

The processing unit 1010 may be associated with a signal port 999 for communication via a first data bus 1115, which signal port 999 may be adapted to be electrically coupled to the electrical calibration circuitry 21.

The non-volatile memory NVM 1120 is adapted for communication with the processing unit 1110 via a second data bus 1112. The separate memory 1160 is adapted for communication with the processing unit 1110 via a third data bus 1111. The read/write memory 1150 is adapted to communicate with the processing unit 1110 via a fourth data bus 1114. The signal (data) port 999 may be connectable to a data communication link of the calibration configuration and/or to suitable network devices.

When data is received by the signal port 999, the data will be stored temporary in the second memory unit 1140. After that the received data is temporary stored, the processing unit 1110 will be ready to execute the program code, in accordance with the exemplary methods.

Preferably, the data signals (received by the signal port 999) comprise information about operational status of the weighing arrangement.

The received data signals at the signal port 999, such as a serial bus, may be used by the electrical control circuitry of the weighing arrangement for transferring a (first and/or second and/or third and/or fourth and/or fifth) output data signal via the data communication link regarding a weighing arrangement measured weight value of a calibration weight member (first and/or second and/or third and/or fourth and/or fifth) to the calibration circuitry.

Furthermore, the electrical control circuitry is adapted to receive a (first and/or second and/or third and/or fourth and/or fifth) input data signal from the calibration circuitry for registering an adjusted weighing arrangement measured weight value of the first calibration weight member in a memory circuitry of the electrical control circuitry of the weighing arrangement.

The electrical control circuitry of the weighing arrangement is configured to be electrically coupled to the calibration circuitry 21.

Alternatively, the calibration circuitry 21 is adapted for monitoring the status of the weighing arrangement.

The data signals received by the signal port 999 can be used for historic data and data regarding the status of the weighing arrangement.

The weighing arrangement may be configured to be coupled to a data network via the signal buss configured for electrical interface explicitly providing electrical compatibility and related data transfer, which data may include information about status of the weighing arrangement.

Data signal may also be manually fed to the calibration circuitry 21, via a suitable user interface communication device, such as a display (not shown).

Separate sequences of the method may be executed by the calibration circuitry 21 and/or the motion control circuitry 25, which circuitry/circuitries being adapted to run the data program P being stored in the separate memory 1160 or the read/write memory 1150.

When the calibration circuitry 21 and/or the motion control circuitry 25 and/or the electrical control circuitry run/runs the data program P, the suitable method steps disclosed herein will be executed.

Alternatively, there is provided a data program product comprising a program code stored on a data medium, which data program product is readable on a computer of the calibration circuitry 21 and/or the motion control circuitry 25 and/or the electrical control circuitry, for performing the exemplary method steps herein, when the data program P is run on the computer.

Fig. 12 shows a calibration configuration 1 adapted for a method of calibration of a weighing arrangement 3 configured for dynamic weighing of a load by the use of the calibration configuration 1. The weighing arrangement 3 comprises a proximity sensor (not shown) adapted to detect a distance measure, an electrical control circuitry 9 coupled to the proximity sensor and configured to convert the distance measure to a weighing arrangement measured weight value of the load.

Alternatively, the weighing arrangement may comprise a compensation control circuitry electronically coupled to the electrical control circuitry and adapted to adjust the weight value into an weighing arrangement measured weight value by compensating for acceleration and/or angle alteration per time and/or angle rate of the weighing arrangement during said dynamic weighing; wherein the electrical control circuitry is further adapted to register the weighing arrangement measured weight value.

The electrical control circuitry 9 is further adapted to register the weighing arrangement measured weight value.

The method may be performed by means comprising a programmable robot apparatus 11.

Alternatively, a motion control circuitry (not shown) of the programmable robot apparatus 11 is adapted for controlling the operation of the programmable robot apparatus.

Alternatively, an end effector device (not shown) of the programmable robot apparatus 11 is configured to be releasable coupled to the weighing arrangement,

Alternatively, a calibration circuitry of the programmable robot apparatus 11 is adapted for electrical communication with the electrical control circuitry via a data communication link 23, wherein the calibration circuitry 21 is set to register an actual weight value of a first calibration weight member.

Alternatively, a the calibration of the weighing arrangement comprises the step of; coupling the end effector device to the weighing arrangement, lifting the weighing arrangement free of any obstruction; performing zero weight calibration; coupling the weighing arrangement to a (first, second, third, fourth, fifth) calibration weight member; lifting the (first, second, third, fourth, fifth) calibration weight member free of any obstruction by means of the end effector device; performing a first sequence span calibration by lifting the first calibration weight member according to a lifting path characteristic.

Alternatively, the calibration circuitry 21 is electrically coupled to the motion control circuitry via an electronic communication line (not shown).

Alternatively, the electrical control circuitry of the weighing arrangement is adapted to send a first output data signal regarding the weighing arrangement measured weight value of the first calibration weight member to the calibration circuitry 21 via said data communication link 23.

Alternatively, the calibration circuitry 21 is adapted for comparing the weighing arrangement measured weight value registered by the electrical control circuitry with the actual weight value of the (first, second, third, fourth, fifth) calibration weight member registered the calibration circuitry.

Alternatively, the calibration circuitry 21 is adapted to process the weighing arrangement measured weight value registered by the electrical control circuitry 9, which weighing arrangement measured weight value is sent from the electrical control circuitry to the calibration circuitry 21 via the data communication link in a (first and/or second and/or third and/or fourth and/or fifth) output data signal.

Alternatively, said comparing and/or processing generates an adjusted weighing arrangement measured weight value, wherein the calibration circuitry 21 is adapted to send a (first and/or second and/or third and/or fourth and/or fifth) input data signal regarding the adjusted weighing arrangement measured weight value to the electrical control circuitry 9.

Alternatively, the adjusted weighing arrangement measured weight value corresponds to the actual weight value and/or relates to a difference weight value regarding a difference between the actual weight value and the weighing arrangement measured weight value.

Alternatively, the calibration circuitry 21 is adapted for sending the weighing arrangement measured weight value to the electrical control circuitry 9 via the data communication link 23.

Alternatively, the electrical control circuitry 9 is adapted to register and/or process a weighing arrangement measured weight value into an adjusted weighing arrangement measured weight value regarding the first calibration weight member.

Alternatively, the electrical control circuitry 9 is adapted for adjusting the weighing arrangement measured weight value into an adjusted weighing arrangement measured weight value regarding the first calibration weight member.

Alternatively, the motion control circuitry adapted for controlling the operation of the programmable robot apparatus is configured to release the first calibration weight member from the weighing arrangement.

Alternatively, the control circuitry adapted for controlling the operation of the programmable robot apparatus is configured to release the weighing arrangement from the end effector device.

Alternatively, the weighing arrangement is configured to be releasable coupled to a first calibration weight member by means of a calibration weight member-weighing arrangement coupling tool member.

Alternatively, the end effector device is configured to be releasable coupled to the weighing arrangement by means of a weighing arrangement-end effector coupling tool member.

Alternatively, the electrical control circuitry 9 is adapted for transferring the adjusted weighing arrangement measured weight value (stored in a memory circuitry of the electrical control circuitry 9) to a communication hub of a garbage vehicle (not shown).

Alternatively, an adjusted weighing arrangement measured weight value is established for each load (garbage) subject to dynamic weighing during use of the weighing arrangement applied to a garbage vehicle.

Alternatively, the adjusted weighing arrangement measured weight value for each load is presented by means of the calibration data database (such as calibration curve data) stored in the memory circuitry of the weighing arrangement.

Alternatively, the adjusted weighing arrangement measured weight value is carried by a data signal, which is transferred from the weighing arrangement 3 to a communication hub 77 of the garbage vehicle via a vehicle data communication link 94, during use of the weighing arrangement 3 mounted to a lifting frame (not shown) of the garbage vehicle.

Alternatively, the weighing arrangement 3 comprises an electrical coupling member 98 that is configured to be coupled to the programmable robot apparatus 11 via the data communication link 23, configured to send the output data signal and/or receive the input data signal and/or the data signal regarding the adjusted weighing arrangement measured weight value.

The weighing arrangement 3 is electrically coupled to a router (not shown) via the communication hub 77. The data signal regarding the adjusted weighing arrangement measured weight value is sent to the router associated with a data management circuitry (not shown) of the vehicle.

Alternatively, the data communication link 23.is configured to be coupled between the electrical control circuitry plug-in member 98 of the weighing arrangement 3 and an electrical calibration circuitry plug-in member 99 of the programmable robot apparatus 11.

Alternatively, the vehicle data communication link 94 and/or the data communication link 23 being configured to be coupled to the electrical control circuitry 9 via a common plug-in member 98 of the weighing arrangement 3.

Alternatively, the lifting the first calibration weight member free of any obstruction is made by means of the end effector device of the robot arm.

## Claims

1. A method of calibration of a weighing arrangement (3) configured for dynamic weighing of a load by the use of a calibration configuration (1), the weighing arrangement (3) comprises;
- a proximity sensor (61) adapted to detect a distance measure (62);
- an electrical control circuitry (9) coupled to the proximity sensor (61) and configured to convert the distance measure (62) to a weighing arrangement measured weight value of the load;
- the electrical control circuitry (9) is further adapted to register the weighing arrangement measured weight value;
wherein said method is performed by means of a programmable robot apparatus (11) comprising;
- a motion control circuitry (25) adapted for controlling the operation of the programmable robot apparatus (11);
- an end effector device (13) configured to be releasable coupled to the weighing arrangement 3;
- a calibration circuitry (21) adapted for electrical communication with the electrical control circuitry (9) via a data communication link (23); wherein
- the calibration circuitry (21) is adapted to register an actual weight value of a first calibration weight member (17');
**the method comprises the steps of:**
- coupling the end effector device (13) to the weighing arrangement (3),
- lifting the weighing arrangement (3) free of any obstruction;
- performing zero weight calibration;
- coupling the weighing arrangement (3) to the first calibration weight member (17');
- lifting the first calibration weight member (17') free of any obstruction by means of the end effector device (13);
- performing a first sequence span calibration by lifting the first calibration weight member (17') according to a lifting path characteristic (LC);
- processing the weighing arrangement measured weight value of the first calibration weight member (17') and the actual weight value of the first calibration weight member (17');
- registering an adjusted weighing arrangement measured weight value of the first calibration weight member (17') in a memory circuitry of the electrical control circuitry 9 of the weighing arrangement 3; and
- releasing the first calibration weight member (17') from the weighing arrangement (3).

2. The method according to claim 1, **wherein** the step of performing the first sequence span calibration comprises rolling the weighing arrangement to a predetermined angle (Ra), and subsequently performing the first sequence span calibration by lifting the first calibration weight member (17') according to the lifting path characteristic (LC).

3. The method according to claim 1 or 2, **wherein** the step of performing the first sequence span calibration comprises pitching the weighing arrangement to a predetermined angle (Pa), and subsequently performing the first sequence span calibration by lifting the first calibration weight member (17') according to the lifting path characteristic (LC).

4. The method according to any of claims 1-3, wherein the calibration circuitry (21) is adapted register an actual weight value of a second calibration weight member (17"); the method **further comprises** the steps of:
- coupling the weighing arrangement (3) to the second calibration weight member (17");
- lifting the second calibration weight member (17") free of any obstruction;
- performing a second sequence span calibration by lifting the second calibration weight member (17") according the lifting path characteristic (LC);
- processing the weighing arrangement measured weight value of the second calibration weight member (17") and the actual weight value of the second calibration weight member (17"), and/or comparing said weighing arrangement measured weight value with said actual weight value, for providing an adjusted weighing arrangement measured weight value of the second calibration weight member (17") corresponding with the actual weight value of the second calibration weight member (17");
- registering the adjusted weighing arrangement measured weight value of the second calibration weight member (17") in a memory circuitry of the electrical control circuitry (9) of the weighing arrangement (3); and
- releasing the second calibration weight member (17") from the weighing arrangement (3).

5. The method according to claim 4, **wherein** the step of performing the second sequence span calibration comprises rolling the weighing arrangement to the predetermined angle (Ra), and subsequently performing the second sequence span calibration by lifting the second calibration weight member (17") according to the lifting path characteristic (LC).

6. The method according to claim 4 or 5, **wherein** the step of performing the second sequence span calibration comprises pitching the weighing arrangement to a predetermined angle (Pa), and subsequently performing the second sequence span calibration by lifting the second calibration weight member (17") according to the lifting path characteristic (LC).

7. The method according to claims 6, **wherein** the calibration circuitry (21) is adapted register an actual weight value of a third calibration weight member (17‴); the method **further comprises** the steps of:
- coupling the weighing arrangement (3) to the third calibration weight member (17‴);
- lifting the third calibration weight member (17‴) free of any obstruction;
- performing a third sequence span calibration by lifting the third calibration weight member (17‴) according the lifting path characteristic (LC);
- comparing the weighing arrangement measured weight value of the third calibration member (17‴) with the actual weight value of the third calibration weight member (17‴);
- adjusting the weighing arrangement measured weight value to the actual weight value of the third calibration weight member (17‴); and
- releasing the third calibration weight member (17‴) from the weighing arrangement (3).

8. The method according to any of claims 1-7, **wherein** the performing of the first sequence span calibration, by lifting the first calibration weight member (17') according to the lifting path characteristic (LC), is repeated a pre-determined number of times.

9. A calibration configuration (1) comprising;
- a weighing arrangement (3) configured for dynamic weighing of a load; which weighing arrangement (3) comprises;
- a proximity sensor (61) adapted to detect a distance measure (62);
- an electrical control circuitry (9) coupled to the proximity sensor (61) and configured to convert the distance measure (62) to a weighing arrangement measured weight value of the load;
- the electrical control circuitry (9) is further adapted to register the weighing arrangement measured weight value;
the calibration configuration (1) is **characterized by**
- a programmable robot apparatus (11) comprising;
- an end effector device (13) configured to be releasable coupled to the weighing arrangement (3) by means of a weighing arrangement-end effector coupling tool member (35);
- the weighing arrangement (3) is configured to be releasable coupled to a first calibration weight member (17') by means of a calibration weight member-weighing arrangement coupling tool member (45);
- a calibration circuitry (21) of the programmable robot apparatus (11) is adapted for electrical communication with the electrical control circuitry (3) via a data communication link (23);
- a motion control circuitry (25) adapted for controlling the operation of the programmable robot apparatus (11);
- the electrical control circuitry (9) of the weighing arrangement (3) is adapted to send a first output data signal regarding the weighing arrangement measured weight value of the first calibration weight member (17') to the calibration circuitry (21) via said data communication link (23);
- the calibration circuitry (21) is adapted to register an actual weight value of the first calibration weight member (17');
- the calibration circuitry (21) and/or the electrical control circuitry (9) being adapted to process the weighing arrangement measured weight value of the first calibration weight member (17') and the actual weight value of the first calibration weight member (17'); and
- the electrical control circuitry (9) is adapted to receive a first input data signal from the calibration circuitry (21) for registering the adjusted weighing arrangement measured weight value of the first calibration weight member (17') in a memory circuitry of the electrical control circuitry (9) of the weighing arrangement (3).

10. The calibration configuration- (1) according to claim 9, **wherein** the programmable robot apparatus (11) is configured to perform at least a first sequence span calibration by lifting the first calibration weight member (17') according to a lifting path characteristic (LC).

11. The calibration configuration (1) according to claim 9 or 10, **wherein** the weighing arrangement-end effector coupling tool member (35) is configured for releasable coupling of the weighing arrangement (3) to the end effector device (13).

12. The calibration configuration according to any of claims 9 to 11, **wherein** the calibration weight member-weighing arrangement coupling tool member (45) is configured for releasable coupling of the first calibration weight member (17') to the weighing arrangement (3).

13. The calibration configuration according to any of claims 10 to 12, **wherein** the lifting path characteristic (LC) alternately being performed in a first and/or second roll position of the weighing arrangement (3) and/or alternately being performed in a first and/or a second pitch position of the weighing arrangement (3).

14. The calibration configuration (1) according to any of claims 9 to 13, **wherein** the weighing arrangement (3) is configured to be releasable coupled to a second calibration weight member (17") by means of the calibration weight member-weighing arrangement coupling tool member (45); wherein the calibration circuitry (21) is adapted for electrical communication with the electrical control circuitry (9) via the data communication link (23); wherein the electrical control circuitry (9) is adapted to send a second output data signal regarding the weighing arrangement measured weight value of the second calibration weight member(17") to the calibration circuitry (21) via said data communication link (23); wherein the calibration circuitry (21) is adapted to register an actual weight value of the second calibration weight member (17");
- the calibration circuitry (21) and/or the electrical control circuitry (9) being adapted to process the weighing arrangement measured weight value of the second calibration weight member (17") and the actual weight value of the second calibration weight member (17"), and/or being adapted to compare said weighing arrangement measured weight value of the second calibration weight member (17") with the actual weight value of the second calibration weight member (17"), for providing an adjusted weighing arrangement measured weight value corresponding with the actual weight value of the second calibration weight member (17"); the electrical control circuitry (9) is adapted to receive a second input data signal from the calibration circuitry (21) for registering the adjusted weighing arrangement measured weight value of the second calibration weight member (17") in the memory circuitry of the electrical control circuitry (9) of the weighing arrangement (3).

15. A data medium, configured for storing a data program (P), which data medium comprises a program code readable by the calibration circuitry (21) of the calibration configuration (1) according to any of claims 9-14 for processing data of the first and/or a second and/or a third and/or a fourth and/or a fifth output data signal regarding the weighing arrangement measured weight value; and sending data of the first and/or a second and/or a third and/or a fourth and/or a fifth input data signal to the weighing arrangement (3) subject to calibration; the data medium is **characterized in that** the program code of the data medium comprises a set of instructions which, when executed by the calibration circuitry (21) and the motion control circuitry (25), cause the programmable robot apparatus (11) to perform the method steps according to any of claims 1-8.

## Patentansprüche

1. Verfahren zum Kalibrieren einer Wägeanordnung (3), die zum dynamischen Wiegen einer Last unter Verwendung einer Kalibrierungskonfiguration (1) konfiguriert ist, wobei die Wägeanordnung (3) Folgendes umfasst;
- einen Näherungssensor (61), der dazu ausgelegt ist, ein Abstandsmaß (62) zu detektieren;
- eine elektrische Steuerschaltung (9), die mit dem Näherungssensor (61) gekoppelt und dazu konfiguriert ist, das Abstandsmaß (62) in einen durch die Wägeanordnung gemessenen Gewichtswert der Last umzuwandeln;
- wobei die elektrische Steuerschaltung (9) ferner dazu ausgelegt ist, den durch die Wägeanordnung gemessenen Gewichtswert zu erfassen;
wobei das Verfahren mittels einer programmierbaren Robotereinrichtung (11) durchgeführt wird, Folgendes umfassend;
- eine Bewegungssteuerungsschaltung (25), die zum Steuern des Betriebs der programmierbaren Robotereinrichtung (11) ausgelegt ist;
- eine Endeffektorvorrichtung (13), die dazu konfiguriert ist, lösbar mit der Wägeanordnung 3 gekoppelt zu werden;
- eine Kalibrierschaltung (21), die zur elektrischen Kommunikation mit der elektrischen Steuerschaltung (9) über eine Datenkommunikationsverbindung (23) ausgelegt ist; wobei
- die Kalibrierschaltung (21) dazu ausgelegt ist, einen tatsächlichen Gewichtswert eines ersten Kalibriergewichtselements (17') zu erfassen;
**wobei das Verfahren die folgenden Schritte umfasst:**
- Koppeln der Endeffektorvorrichtung (13) mit der Wägeanordnung (3),
- Anheben der Wägeanordnung (3), ohne dabei auf Hindernisse zu treffen;
- Durchführen einer Nullgewichtskalibrierung;
- Koppeln der Wägeanordnung (3) mit dem ersten Kalibriergewichtselement (17');
- Anheben des ersten Kalibriergewichtselements (17') mittels der Endeffektorvorrichtung (13), ohne dabei auf Hindernisse zu treffen;
- Durchführen einer ersten Sequenzspannweitenkalibrierung durch Anheben des ersten Kalibriergewichtselements (17') gemäß einer Hubwegcharakteristik (lifting path characteristic - LC);
- Verarbeiten des durch die Wägeanordnung gemessenen Gewichtswerts des ersten Kalibriergewichtselements (17') und des tatsächlichen Gewichtswerts des ersten Kalibriergewichtselements (17');
- Erfassen eines angepassten, durch die Wägeanordnung gemessenen Gewichtswerts des ersten Kalibriergewichtselements (17') in einer Speicherschaltung der elektrischen Steuerschaltung 9 der Wägeanordnung 3; und
- Lösen des ersten Kalibriergewichtselements (17') von der Wägeanordnung (3).

2. Verfahren nach Anspruch 1, **wobei** der Schritt des Durchführens der ersten Sequenzspannweitenkalibrierung das Wanken der Wägeanordnung auf einen vorbestimmten Winkel (Ra) und das anschließende Durchführen der ersten Sequenzspannweitenkalibrierung durch Anheben des ersten Kalibriergewichtselements (17') gemäß der Hubwegcharakteristik (LC) umfasst.

3. Verfahren nach Anspruch 1 oder 2, **wobei** der Schritt des Durchführens der ersten Sequenzspannweitenkalibrierung das Nicken der Wägeanordnung auf einen vorbestimmten Winkel (Pa) und das anschließende Durchführen der ersten Sequenzspannweitenkalibrierung durch Anheben des ersten Kalibriergewichtselements (17') gemäß der Hubwegcharakteristik (LC) umfasst.

4. Verfahren nach einem der Ansprüche 1-3, wobei die Kalibrierschaltung (21) dazu ausgelegt ist, einen tatsächlichen Gewichtswert eines zweiten Kalibriergewichtselements (17") zu erfassen; wobei das Verfahren **ferner** die folgenden Schritte **umfasst:**
- Koppeln der Wägeanordnung (3) mit dem zweiten Kalibriergewichtselement (17");
- Anheben des zweiten Kalibriergewichtselements (17"), ohne dabei auf Hindernisse zu treffen;
- Durchführen einer zweiten Sequenzspannweitenkalibrierung durch Anheben des zweiten Kalibriergewichtselements (17") gemäß der Hubwegcharakteristik (LC);
- Verarbeiten des durch die Wägeanordnung gemessenen Gewichtswerts des zweiten Kalibriergewichtselements (17") und des tatsächlichen Gewichtswerts des zweiten Kalibriergewichtselements (17") und/oder Vergleichen des durch die Wägeanordnung gemessenen Gewichtswerts mit dem tatsächlichen Gewichtswert, um einen angepassten, durch die Wägeanordnung gemessenen Gewichtswert des zweiten Kalibriergewichtselements (17") bereitzustellen, der dem tatsächlichen Gewichtswert des zweiten Kalibriergewichtselements (17") entspricht;
- Erfassen des angepassten, durch die Wägeanordnung gemessenen Gewichtswerts des zweiten Kalibriergewichtselements (17") in einer Speicherschaltung der elektrischen Steuerschaltung (9) der Wägeanordnung (3); und
- Lösen des zweiten Kalibriergewichtselements (17") von der Wägeanordnung (3).

5. Verfahren nach Anspruch 4, **wobei** der Schritt des Durchführens der zweiten Sequenzspannweitenkalibrierung das Wanken der Wägeanordnung auf den vorbestimmten Winkel (Ra) und das anschließende Durchführen der zweiten Sequenzspannweitenkalibrierung durch Anheben des zweiten Kalibriergewichtselements (17") gemäß der Hubwegcharakteristik (LC) umfasst.

6. Verfahren nach Anspruch 4 oder 5, **wobei** der Schritt des Durchführens der zweiten Sequenzspannweitenkalibrierung das Nicken der Wägeanordnung auf einen vorbestimmten Winkel (Pa) und das anschließende Durchführen der zweiten Sequenzspannweitenkalibrierung durch Anheben des zweiten Kalibriergewichtselements (17") gemäß der Hubwegcharakteristik (LC) umfasst.

7. Verfahren nach Anspruch 6, **wobei** die Kalibrierschaltung (21) dazu ausgelegt ist, einen tatsächlichen Gewichtswert eines dritten Kalibriergewichtselements (17‴) zu erfassen; wobei das Verfahren **ferner** die folgenden Schritte **umfasst:**
- Koppeln der Wägeanordnung (3) mit dem dritten Kalibriergewichtselement (17‴);
- Anheben des dritten Kalibriergewichtselements (17'''), ohne dabei auf Hindernisse zu treffen;
- Durchführen einer dritten Sequenzspannweitenkalibrierung durch Anheben des dritten Kalibriergewichtselements (17‴) gemäß der Hubwegcharakteristik (LC);
- Vergleichen des durch die Wägeanordnung gemessenen Gewichtswerts des dritten Kalibrierelements (17‴) mit dem tatsächlichen Gewichtswert des dritten Kalibriergewichtselements (17‴);
- Einstellen des durch die Wägeanordnung gemessenen Gewichtswerts auf den tatsächlichen Gewichtswert des dritten Kalibriergewichtselements (17‴); und
- Lösen des dritten Kalibriergewichtselements (17‴) von der Wägeanordnung (3).

8. Verfahren nach einem der Ansprüche 1-7, **wobei** das Durchführen der ersten Sequenzspannweitenkalibrierung durch Anheben des ersten Kalibriergewichtselements (17') gemäß der Hubwegcharakteristik (LC) eine vorbestimmte Anzahl von Malen wiederholt wird.

9. Kalibrierungskonfiguration (1), Folgendes umfassend;
- eine Wägeanordnung (3), die zum dynamischen Wiegen einer Last konfiguriert ist; wobei die Wägeanordnung (3) Folgendes umfasst;
- einen Näherungssensor (61), der dazu ausgelegt ist, ein Abstandsmaß (62) zu detektieren;
- eine elektrische Steuerschaltung (9), die mit dem Näherungssensor (61) gekoppelt und dazu konfiguriert ist, das Abstandsmaß (62) in einen durch die Wägeanordnung gemessenen Gewichtswert der Last umzuwandeln;
- wobei die elektrische Steuerschaltung (9) ferner dazu ausgelegt ist, den durch die Wägeanordnung gemessenen Gewichtswert zu erfassen;
wobei die Kalibrierungskonfiguration (1) **gekennzeichnet ist durch**
- eine programmierbare Robotereinrichtung (11), Folgendes umfassend;
- eine Endeffektorvorrichtung (13), die dazu konfiguriert ist, dass sie mittels eines Wägeanordnung-Endeffektor-Kopplungswerkzeugelements (35) lösbar mit der Wägeanordnung (3) gekoppelt wird;
- wobei die Wägeanordnung (3) dazu konfiguriert ist, dass sie mittels eines Kalibriergewichtselement-Wägeanordnung-Kopplungswerkzeugelements (45) lösbar mit einem ersten Kalibriergewichtselement (17') gekoppelt wird;
- wobei eine Kalibrierschaltung (21) der programmierbaren Robotereinrichtung (11) zur elektrischen Kommunikation mit der elektrischen Steuerschaltung (3) über eine Datenkommunikationsverbindung (23) ausgelegt ist;
- eine Bewegungssteuerungsschaltung (25), die zum Steuern des Betriebs der programmierbaren Robotereinrichtung (11) ausgelegt ist;
- wobei die elektrische Steuerschaltung (9) der Wägeanordnung (3) dazu ausgelegt ist, ein erstes Ausgabedatensignal bezüglich des **durch** die Wägeanordnung gemessenen Gewichtswerts des ersten Kalibriergewichtselements (17') über die Datenkommunikationsverbindung (23) an die Kalibrierschaltung (21) zu senden;
- die Kalibrierschaltung (21) dazu ausgelegt ist, einen tatsächlichen Gewichtswert des ersten Kalibriergewichtselements (17') zu erfassen;
- die Kalibrierschaltung (21) und/oder die elektrische Steuerschaltung (9) dazu ausgelegt sind, den **durch** die Wägeanordnung gemessenen Gewichtswert des ersten Kalibriergewichtselements (17') und den tatsächlichen Gewichtswert des ersten Kalibriergewichtselements (17') zu verarbeiten; und
- die elektrische Steuerschaltung (9) dazu ausgelegt ist, ein erstes Eingabedatensignal von der Kalibrierschaltung (21) zum Erfassen des angepassten, **durch** die Wägeanordnung gemessenen Gewichtswerts des ersten Kalibriergewichtselements (17') in einer Speicherschaltung der elektrischen Steuerschaltung (9) der Wägeanordnung (3) zu empfangen.

10. Kalibrierungskonfiguration (1) nach Anspruch 9, **wobei** die programmierbare Robotereinrichtung (11) dazu konfiguriert ist, mindestens eine erste Sequenzspannweitenkalibrierung durch Anheben des ersten Kalibriergewichtselements (17') gemäß einer Hubwegcharakteristik (LC) durchzuführen.

11. Kalibrierungskonfiguration (1) nach Anspruch 9 oder 10, **wobei** das Wägeanordnung-Endeffektor-Kopplungswerkzeugelement (35) zum lösbaren Koppeln der Wägeanordnung (3) mit der Endeffektorvorrichtung (13) konfiguriert ist.

12. Kalibrierungskonfiguration nach einem der Ansprüche 9 bis 11, **wobei** das Kalibriergewichtselement-Wägeanordnung-Kopplungswerkzeugelement (45) zum lösbaren Koppeln des ersten Kalibriergewichtselements (17') mit der Wägeanordnung (3) konfiguriert ist.

13. Kalibrierungskonfiguration nach einem der Ansprüche 10 bis 12, **wobei** die Hubwegcharakteristik (LC) abwechselnd in einer ersten und/oder zweiten Wankposition der Wägeanordnung (3) durchgeführt wird und/oder abwechselnd in einer ersten und/oder einer zweiten Nickposition der Wägeanordnung (3) durchgeführt wird.

14. Kalibrierungskonfiguration (1) nach einem der Ansprüche 9 bis 13, **wobei** die Wägeanordnung (3) dazu konfiguriert ist, mittels des Kalibriergewichtselement-Wägeanordnung-Kopplungswerkzeugelements (45) lösbar mit einem zweiten Kalibriergewichtselement (17") gekoppelt zu werden; wobei die Kalibrierschaltung (21) zur elektrischen Kommunikation mit der elektrischen Steuerschaltung (9) über die Datenkommunikationsverbindung (23) ausgelegt ist; wobei die elektrische Steuerschaltung (9) dazu ausgelegt ist, ein zweites Ausgabedatensignal bezüglich des durch die Wägeanordnung gemessenen Gewichtswerts des zweiten Kalibriergewichtselements (17'') über die Datenkommunikationsverbindung (23) an die Kalibrierschaltung (21) zu senden; wobei die Kalibrierschaltung (21) dazu ausgelegt ist, einen tatsächlichen Gewichtswert des zweiten Kalibriergewichtselements (17'') zu erfassen;
- wobei die Kalibrierschaltung (21) und/oder die elektrische Steuerschaltung (9) dazu ausgelegt sind, den durch die Wägeanordnung gemessenen Gewichtswert des zweiten Kalibriergewichtselements (17'') und den tatsächlichen Gewichtswert des zweiten Kalibriergewichtselements (17'') zu verarbeiten, und/oder dazu ausgelegt sind, den durch die Wägeanordnung gemessenen Gewichtswert des zweiten Kalibriergewichtselements (17'') mit dem tatsächlichen Gewichtswert des zweiten Kalibriergewichtselements (17'') zu vergleichen, um einen angepassten, durch die Wägeanordnung gemessenen Gewichtswert bereitzustellen, der dem tatsächlichen Gewichtswert des zweiten Kalibriergewichtselements (17'') entspricht; wobei die elektrische Steuerschaltung (9) dazu ausgelegt ist, ein zweites Eingabedatensignal von der Kalibrierschaltung (21) zum Erfassen des angepassten, durch die Wägeanordnung gemessenen Gewichtswerts des zweiten Kalibriergewichtselements (17'') in der Speicherschaltung der elektrischen Steuerschaltung (9) der Wägeanordnung (3) zu empfangen.

15. Datenträger, der zum Speichern eines Datenprogramms (P) konfiguriert ist, wobei der Datenträger einen Programmcode umfasst, der durch die Kalibrierschaltung (21) der Kalibrierungskonfiguration (1) nach einem der Ansprüche 9-14 lesbar ist, um Daten des ersten und/oder eines zweiten und/oder eines dritten und/oder eines vierten und/oder eines fünften Ausgabedatensignals bezüglich des durch die Wägeanordnung gemessenen Gewichtswert zu verarbeiten; und Senden von Daten des ersten und/oder eines zweiten und/oder eines dritten und/oder eines vierten und/oder eines fünften Eingabedatensignals an die zu kalibrierende Wägeanordnung (3); wobei der Datenträger **dadurch gekennzeichnet ist, dass** der Programmcode des Datenträgers einen Satz von Anweisungen umfasst, die, wenn sie durch die Kalibrierschaltung (21) und die Bewegungssteuerschaltung (25) ausgeführt werden, die programmierbare Robotereinrichtung (11) veranlassen, die Verfahrensschritte nach einem der Ansprüche 1-8 auszuführen.

## Revendications

1. Procédé d'étalonnage d'un agencement de pesée (3) configuré pour la pesée dynamique d'une charge par l'utilisation d'une configuration d'étalonnage (1), l'agencement de pesée (3) comprenant :
- un capteur de proximité (61) adapté pour détecter une mesure de distance (62) ;
- un circuit de commande électrique (9) couplé au capteur de proximité (61) et configuré pour convertir la mesure de distance (62) en une valeur de poids mesurée par l'agencement de pesée de la charge ;
- le circuit de commande électrique (9) est en outre adapté pour enregistrer la valeur de poids mesurée par l'agencement de pesée ;
dans lequel ledit procédé est exécuté au moyen d'un appareil robotique programmable (11) comprenant :
- un circuit de commande de mouvement (25) adapté pour commander le fonctionnement de l'appareil robotique programmable (11) ;
- un dispositif effecteur d'extrémité (13) configuré pour être couplé de manière libérable à l'agencement de pesée (3) ;
- un circuit d'étalonnage (21) adapté pour communiquer électriquement avec le circuit de commande électrique (9) via une liaison de communication de données (23) ; dans lequel
- le circuit d'étalonnage (21) est adapté pour enregistrer une valeur de poids réelle d'un premier élément de poids d'étalonnage (17') ;
**le procédé comprend les étapes consistant à :**
- coupler le dispositif effecteur d'extrémité (13) à l'agencement de pesée (3) ;
- soulever l'agencement de pesée (3) libre de toute obstruction ;
- effectuer un étalonnage de poids zéro ;
- coupler l'agencement de pesée (3) au premier élément de poids d'étalonnage (17') ;
- soulever le premier élément de poids d'étalonnage (17') libre de toute obstruction au moyen du dispositif effecteur d'extrémité (13) ;
- effectuer un premier étalonnage d'étendue de séquence en soulevant le premier élément de poids d'étalonnage (17') selon une caractéristique de chemin de levage (LC) ;
- traiter la valeur de poids mesurée par l'agencement de pesée du premier élément de poids d'étalonnage (17') et la valeur de poids réelle du premier élément de poids d'étalonnage (17') ;
- enregistrer une valeur de poids mesurée ajustée de l'agencement de pesée du premier élément de poids d'étalonnage (17') dans un circuit de mémoire du circuit de commande électrique (9) de l'agencement de pesée (3) ; et
- libérer le premier élément de poids d'étalonnage (17') de l'agencement de pesée (3).

2. Procédé selon la revendication 1, **dans lequel** l'étape consistant à effectuer le premier étalonnage d'étendue de séquence comprend le roulis de l'agencement de pesée jusqu'à un angle prédéterminé (Ra), et ensuite la réalisation du premier étalonnage d'étendue de séquence en soulevant le premier élément de poids d'étalonnage (17') selon la caractéristique de chemin de levage (LC).

3. Procédé selon la revendication 1 ou 2, **dans lequel** l'étape consistant à effectuer le premier étalonnage d'étendue de séquence comprend le tangage de l'agencement de pesée jusqu'à un angle prédéterminé (Pa), et ensuite la réalisation du premier étalonnage d'étendue de séquence en soulevant le premier élément de poids d'étalonnage (17') selon la caractéristique de chemin de levage (LC).

4. Procédé selon l'une quelconque des revendications 1 à 3, dans lequel le circuit d'étalonnage (21) est adapté pour enregistrer une valeur de poids réelle d'un second élément de poids d'étalonnage (17'') ; le procédé **comprenant en outre** les étapes consistant à :
- coupler l'agencement de pesée (3) au second élément de poids d'étalonnage (17'') ;
- soulever le second élément de poids d'étalonnage (17'') libre de toute obstruction ;
- effectuer un second étalonnage d'étendue de séquence en soulevant le second élément de poids d'étalonnage (17'') selon la caractéristique de chemin de levage (LC) ;
- traiter la valeur de poids mesurée par l'agencement de pesée du second élément de poids d'étalonnage (17'') et la valeur de poids réelle du second élément de poids d'étalonnage (17''), et/ou comparer ladite valeur de poids mesurée par l'agencement de pesée avec ladite valeur de poids réelle, pour fournir une valeur de poids mesurée ajustée de l'agencement de pesée du second élément de poids d'étalonnage (17'') correspondant à la valeur de poids réelle du second élément de poids d'étalonnage (17") ;
- enregistrer la valeur de poids mesurée ajustée de l'agencement de pesée du second élément de poids d'étalonnage (17") dans un circuit de mémoire du circuit de commande électrique (9) de l'agencement de pesée (3) ; et
- libérer le second élément de poids d'étalonnage (17") de l'agencement de pesée (3).

5. Procédé selon la revendication 4, **dans lequel** l'étape consistant à effectuer le second étalonnage d'étendue de séquence comprend le roulis de l'agencement de pesée jusqu'à l'angle prédéterminé (Ra), et ensuite la réalisation du second étalonnage d'étendue de séquence en soulevant le second élément de poids d'étalonnage (17") selon la caractéristique de chemin de levage (LC).

6. Procédé selon la revendication 4 ou 5, **dans lequel** l'étape consistant à effectuer le second étalonnage d'étendue de séquence comprend le tangage de l'agencement de pesée jusqu'à l'angle prédéterminé (Pa), et ensuite la réalisation du second étalonnage d'étendue de séquence en soulevant le second élément de poids d'étalonnage (17") selon la caractéristique de chemin de levage (LC).

7. Procédé selon la revendication 6, **dans lequel** le circuit d'étalonnage (21) est adapté pour enregistrer une valeur de poids réelle d'un troisième élément de poids d'étalonnage (17‴) ; le procédé **comprenant en outre** les étapes consistant à :
- coupler l'agencement de pesée (3) au troisième élément de poids d'étalonnage (17‴) ;
- soulever le troisième élément de poids d'étalonnage (17‴) libre de toute obstruction ;
- effectuer un troisième étalonnage d'étendue de séquence en soulevant le troisième élément de poids d'étalonnage (17‴) selon la caractéristique de chemin de levage (LC) ;
- comparer la valeur de poids mesurée par l'agencement de pesée du troisième élément d'étalonnage (17''') avec la valeur de poids réelle du troisième élément de poids d'étalonnage (17‴) ;
- ajuster la valeur de poids mesurée par l'agencement de pesée à la valeur de poids réelle du troisième élément de poids d'étalonnage (17‴) ; et
- libérer le troisième élément de poids d'étalonnage (17‴) de l'agencement de pesée (3).

8. Procédé selon l'une quelconque des revendications 1 à 7, **dans lequel** la réalisation du premier étalonnage d'étendue de séquence, en soulevant le premier élément de poids d'étalonnage (17') selon la caractéristique de chemin de levage (LC), est répétée un nombre prédéterminé de fois.

9. Configuration d'étalonnage (1) comprenant :
- un agencement de pesée (3) configuré pour la pesée dynamique d'une charge ; ledit agencement de pesée (3) comprenant :
- un capteur de proximité (61) adapté pour détecter une mesure de distance (62) ;
- un circuit de commande électrique (9) couplé au capteur de proximité (61) et configuré pour convertir la mesure de distance (62) en une valeur de poids mesurée par l'agencement de pesée de la charge ;
- le circuit de commande électrique (9) est en outre adapté pour enregistrer la valeur de poids mesurée par l'agencement de pesée ;
la configuration d'étalonnage (1) est **caractérisée par**
- un appareil robotique programmable (11) comprenant :
- un dispositif effecteur d'extrémité (13) configuré pour être couplé de manière libérable à l'agencement de pesée (3) au moyen d'un élément d'outil de couplage agencement de pesée-effecteur d'extrémité (35) ;
- l'agencement de pesée (3) est configuré pour être couplé de manière libérable à un premier élément de poids d'étalonnage (17') au moyen d'un élément d'outil de couplage élément de poids d'étalonnage-agencement de pesée (45) ;
- un circuit d'étalonnage (21) de l'appareil robotique programmable (11) est adapté pour communiquer électriquement avec le circuit de commande électrique (3) via une liaison de communication de données (23) ;
- un circuit de commande de mouvement (25) adapté pour commander le fonctionnement de l'appareil robotique programmable (11) ;
- le circuit de commande électrique (9) de l'agencement de pesée (3) est adapté pour envoyer un premier signal de données de sortie concernant la valeur de poids mesurée par l'agencement de pesée du premier élément de poids d'étalonnage (17') au circuit d'étalonnage (21) via ladite liaison de communication de données (23) ;
- le circuit d'étalonnage (21) est adapté pour enregistrer une valeur de poids réelle du premier élément de poids d'étalonnage (17') ;
- le circuit d'étalonnage (21) et/ou le circuit de commande électrique (9) étant adaptés pour traiter la valeur de poids mesurée par l'agencement de pesée du premier élément de poids d'étalonnage (17') et la valeur de poids réelle du premier élément de poids d'étalonnage (17') ; et
- le circuit de commande électrique (9) est adapté pour recevoir un premier signal de données d'entrée provenant du circuit d'étalonnage (21) pour enregistrer la valeur de poids mesurée ajustée de l'agencement de pesée du premier élément de poids d'étalonnage (17') dans un circuit de mémoire du circuit de commande électrique (9) de l'agencement de pesée (3).

10. Configuration d'étalonnage (1) selon la revendication 9, **dans laquelle** l'appareil robotique programmable (11) est configuré pour effectuer au moins un premier étalonnage d'étendue de séquence en soulevant le premier élément de poids d'étalonnage (17') selon une caractéristique de chemin de levage (LC).

11. Configuration d'étalonnage (1) selon la revendication 9 ou 10, **dans laquelle** l'élément d'outil de couplage agencement de pesée-effecteur d'extrémité (35) est configuré pour le couplage libérable de l'agencement de pesée (3) au dispositif effecteur d'extrémité (13).

12. Configuration d'étalonnage selon l'une quelconque des revendications 9 à 11, **dans laquelle** l'élément d'outil de couplage élément de poids d'étalonnage-agencement de pesée (45) est configuré pour le couplage libérable du premier élément de poids d'étalonnage (17') à l'agencement de pesée (3).

13. Configuration d'étalonnage selon l'une quelconque des revendications 10 à 12, **dans laquelle** la caractéristique de chemin de levage (LC) est exécutée alternativement dans une première et/ou seconde position de roulis de l'agencement de pesée (3) et/ou est exécutée alternativement dans une première et/ou une seconde position de tangage de l'agencement de pesée (3).

14. Configuration d'étalonnage (1) selon l'une quelconque des revendications 9 à 13, **dans laquelle** l'agencement de pesée (3) est configuré pour être couplé de manière libérable à un second élément de poids d'étalonnage (17'') au moyen de l'élément d'outil de couplage élément de poids d'étalonnage-agencement de pesée (45) ; dans laquelle le circuit d'étalonnage (21) est adapté pour communiquer électriquement avec le circuit de commande électrique (9) via la liaison de communication de données (23) ; dans laquelle le circuit de commande électrique (9) est adapté pour envoyer un second signal de données de sortie concernant la valeur de poids mesurée par l'agencement de pesée du second élément de poids d'étalonnage (17") au circuit d'étalonnage (21) via ladite liaison de communication de données (23) ; dans laquelle le circuit d'étalonnage (21) est adapté pour enregistrer une valeur de poids réelle du second élément de poids d'étalonnage (17") ;
- le circuit d'étalonnage (21) et/ou le circuit de commande électrique (9) étant adaptés pour traiter la valeur de poids mesurée par l'agencement de pesée du second élément de poids d'étalonnage (17") et la valeur de poids réelle du second élément de poids d'étalonnage (17''), et/ou étant adapté(s) pour comparer ladite valeur de poids mesurée par l'agencement de pesée du second élément de poids d'étalonnage (17'') avec la valeur de poids réelle du second élément de poids d'étalonnage (17''), pour fournir une valeur de poids mesurée ajustée de l'agencement de pesée correspondant à la valeur de poids réelle du second élément de poids d'étalonnage (17") ; le circuit de commande électrique (9) est adapté pour recevoir un second signal de données d'entrée provenant du circuit d'étalonnage (21) pour enregistrer la valeur de poids mesurée ajustée de l'agencement de pesée du second élément de poids d'étalonnage (17'') dans le circuit de mémoire du circuit de commande électrique (9) de l'agencement de pesée (3).

15. Support de données, configuré pour stocker un programme de données (P), ledit support de données comprenant un code de programme lisible par le circuit d'étalonnage (21) de la configuration d'étalonnage (1) selon l'une quelconque des revendications 9 à 14 pour traiter les données du premier et/ou d'un second et/ou d'un troisième et/ou d'un quatrième et/ou d'un cinquième signal de données de sortie concernant la valeur de poids mesurée par l'agencement de pesée ; et envoyer les données du premier et/ou d'un second et/ou d'un troisième et/ou d'un quatrième et/ou d'un cinquième signal de données d'entrée à l'agencement de pesée (3) soumis à l'étalonnage ; le support de données est **caractérisé en ce que** le code de programme du support de données comprend un ensemble d'instructions qui, lorsqu'elles sont exécutées par le circuit d'étalonnage (21) et le circuit de commande de mouvement (25), amènent l'appareil robotique programmable (11) à réaliser les étapes du procédé selon l'une quelconque des revendications 1 à 8.
